# EUROPEAN PATENT APPLICATION

(11) **EP 4 553 674 A1**
(43) Date of publication of application: **14.05.2025**
(21) Application number: 24209430.8
(22) Date of filing: 29.10.2024
(51) Int. Cl.: G06F 16/3329, G06F 16/9032

(54) **QUESTION ANSWERING METHOD AND SYSTEM BASED ON TRAINED MODEL**

(30) Priority: 07.11.2023 JP 2023189993
(71) Applicant: Ricoh Company, Ltd., Tokyo 143-8555 (JP)
(72) Inventor: MOTOHASHI, Naoki, Tokyo, 143-8555 (JP)
(74) Representative: SSM Sandmair

(57) **Abstract**

An information processing apparatus includes: storage means (4000) configured to store a model generated using text data as training data, the text data being data based on at least one of voice information and character information; text information generation means (45) configured to generate, based on a question and the model, text information indicating an answer to the question; and screen generation means (42) configured to generate a screen based on attribute information of one or more data providers who have provided the at least one of voice information and character information.

## Description

### BACKGROUND

### Technical Field

The present disclosure relates to an information processing apparatus, an information processing system, an information processing method, and carrier means.

### Related Art

Generative artificial intelligence (AI) allows generation of text information from various kinds of content (e.g., text, images, and voices). Conventional AI presents the best answer from learned data. In constant, generative AI, which continuously learns, learns even information or data that is not provided by the human and enables output of original content that has not been input.

For example, Japanese Patent No. 6839123 discloses a technique for improving the quality of training data in machine learning. In the technique disclosed in Japanese Patent No. 6839123, a learning model receives failure information received from a user as an input and outputs a failure recovery procedure. The learning model sets a weight for evaluation related to the usefulness of the failure recovery procedure to be used for retraining, based on skill information indicating the skill of the user in recovering from a failure.

However, the technique of the related art does not facilitate the use of the model.

### SUMMARY

According to an embodiment of the present disclosure, an information processing apparatus includes storage means, text information generation means, and screen generation means. The storage means stores a model generated using text data as training data. The text data is data based on at least one of voice information and character information. The text information generation means generates, based on a question and the model, text information indicating an answer to the question. The screen generation means generates a screen based on attribute information of one or more data providers who have provided the at least one of voice information and character information.

According to an embodiment of the present disclosure, an information processing system includes the above-described information processing apparatus and the above-described terminal device. The terminal device is communicable with the information processing apparatus via a network. The information processing apparatus includes first transmission means. The terminal device includes input reception means, second transmission means, and display control means. The input reception means receives an input of the question. The second transmission means transmits the question to the information processing apparatus. The display control means displays a screen including attribute information of the one or more data providers, based on the screen information received from the information processing apparatus.

According to an embodiment of the present disclosure, an information processing method is performed by an information processing apparatus. The information processing method includes generating, based on a question and a model, text information indicating an answer to the question, the model being generated using text data as training data, the text data being data based on at least one of voice information and character information having been input; and generating a screen including attribute information of one or more data providers who have provided the at least one of voice information and character information.

According to an embodiment of the present disclosure, carrier means carries computer readable code for controlling a computer system to carry out the above-described method.

According to the one or more embodiments described above, the screen is provided to the user, which facilitates the use of a model.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of a general arrangement of an information processing system;
FIG. 2 is a diagram illustrating an example of a hardware configuration of a terminal device and a server;
FIG. 3 is a block diagram illustrating an example of a functional configuration of the information processing system;
FIG. 4A is an illustration of an example of a user information management table;
FIG. 4B is an illustration of an example of an image management table;
FIG. 5 is a sequence diagram illustrating an example of a model update process;
FIG. 6 is a sequence diagram illustrating an example of a text information generation process;
FIG. 7A, FIG. 7B, and FIG. 7C are flowcharts illustrating an example of various processes;
FIG. 8 is a flowchart illustrating an example of a process for displaying attribute information of a data provider having the highest level of attribute relevance to attribute information of a user;
FIG. 9A and FIG. 9B are illustrations of an example of display screens in the model update process and the text information generation process, respectively;
FIG. 10A and FIG. 10B are illustrations of another example of the display screens in the model update process and the text information generation process, respectively;
FIG. 11A and FIG. 11B are illustrations of an example of a question-and-answer screen and an attribute information registration screen, respectively;
FIG. 12A is an illustration of an example of a question-and-answer screen displayed when the user uses the information processing system;
FIG. 12B is an illustration of an example of a question-and-answer screen including a data provider confirmation field;
FIG. 13A is an illustration of an example of a question-and-answer screen on which a statistical information field is displayed;
FIG. 13B is an illustration of an example of a question-and-answer screen displayed in response to a pressing of one of categories;
FIG. 14 is a flowchart illustrating an example of a process for displaying statistical information generated from attribute information of the top N data providers having high levels of attribute relevance to the attribute information of the user;
FIG. 15 is an illustration of an example of an image management table;
FIG. 16 is an illustration of an example of a question-and-answer screen on which a data provider confirmation field is displayed;
FIG. 17 is a flowchart illustrating an example of a process for displaying attribute information of a past user having the highest level of attribute relevance to the attribute information of the user;
FIG. 18A is an illustration of an example of a question-and-answer screen on which a statistical information field is displayed;
FIG. 18B is an illustration of an example of a question-and-answer screen displayed in response to a pressing of one of the categories;
FIG. 19 is a flowchart illustrating an example of a process for displaying statistical information generated from attribute information of the top N past users having high levels of attribute relevance to the attribute information of the user;
FIG. 20A and FIG. 20B are illustrations of examples of a question-and-answer screen for inputting content other than text;
FIG. 21A and FIG. 21B are illustrations of examples of a question-and-answer screen for inputting content other than text;
FIG. 22 is an illustration of an example of a question-and-answer screen on which provided data other than text is displayed in response to a pressing of one of the categories; and
FIG. 23 is an illustration of an example of a question-and-answer screen for selecting a model.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An information processing system and an information processing method performed by the information processing system according to an embodiment of the present disclosure will be described hereinafter with reference to the drawings.

### Supplementary Information Related to Tacit Knowledge

In the fields of civil engineering and architecture, the implementation of building information modeling (BIM)/construction information modeling (CIM) has been facilitated for, for example, coping with the demographic shift towards an older population and enhancing labor efficiency and productivity.

BIM is a solution that involves utilizing a database of buildings, in which attribute data such as cost, finishing details, and management information is added to a three-dimensional (3D) digital model of a building. This model is created on a computer and utilized throughout every stage of the architectural process, including design, construction, and maintenance. The three-dimensional digital model is referred to as a 3D model in the following description.

CIM is a solution that has been proposed for the field of civil engineering (covering general infrastructure such as roads, electricity, gas, and water supply) following BIM that has been advancing in the field of architecture. CIM is being pursued, similarly to BIM, to aim for efficiency and advancement in a series of construction production systems by sharing information through centralized 3D models among participants.

One issue to facilitate implementations of BIM and CIM is how to utilize the constructed BIM and CIM.

Specifically, a 3D model restored by BIM and CIM can be utilized for design and construction purposes and other work such as maintenance and site inspection. That is, BIM and CIM may be used for purposes other than blueprints, such as making a record in the 3D model or sharing the record with another person.

Since work performed on the 3D model is recordable as a log, tacit knowledge extractable based on the work will be effectively used to transfer technology from experts to beginners. This is expected to lead to front loading of business, human resource development, and so on.

Focusing on the transfer of tacit knowledge, a challenge is how to transfer tacit knowledge between different tasks or between users with different levels of skill, as described above, for two-dimensional (2D) datasets (such as spherical images or planar images) as well as for 3D models.

Specifically, tacit knowledge is qualitative and difficult to quantify. Even when a tacit knowledge model is generated from tacit knowledge, it is difficult to secure confidence from a user about the tacit knowledge model and to facilitate the use of the tacit knowledge model. For example, in a case where the field of expertise of the user is different from the field of expertise of the tacit knowledge model, the tacit knowledge model is useless for the user no matter how excellent the tacit knowledge model is. The tacit knowledge model is also useless for the user if the knowledge level of the tacit knowledge model is lower than the knowledge level of the user.

However, it is a fact that the tacit knowledge model provides the user with a new point of view or awareness, and the use of the tacit knowledge model allows even an inexperienced user to acquire know-how or technology and use the know-how or technology for work.

Accordingly, one or more embodiments of the present disclosure provide a technique for promoting the use of a tacit knowledge model to a user who is aware of the usefulness of the tacit knowledge model and even to a user who is unaware of the usefulness of the tacit knowledge model.

### Terminology

Attribute relevance is the measure of how relevant the attributes of a user are to the attributes of a data provider or the attributes of a past user. The level of attribute relevance, for example, the level of relevance of attribute information of a user to attribute information of a data provider, is represented as a numerical value. The level of attribute relevance is calculated by an existing method, such as focusing on the commonality of words. The method of calculating the level of attribute relevance will be described below.

The term "user" refers to a person who uses text information generated by a tacit knowledge model. As the text information, content other than text, such as images, may be output. The term "data provider" refers to a person who provides data to be used by the tacit knowledge model for training, such as voice information, character information, operation information, images, and 3D data.

Tacit knowledge (or implicit knowledge) is knowledge that is based on personal experience, intuition, and the like. The term "tacit knowledge model" refers to a model that learns tacit knowledge and outputs an answer to a question based on the learned tacit knowledge. The term "model" refers to a mechanism or artificial intelligence (AI) that learns the correspondence between input data and output data and outputs the output data for the input data. The output data may or may not be labeled data.

### First Embodiment

### Example of System Configuration

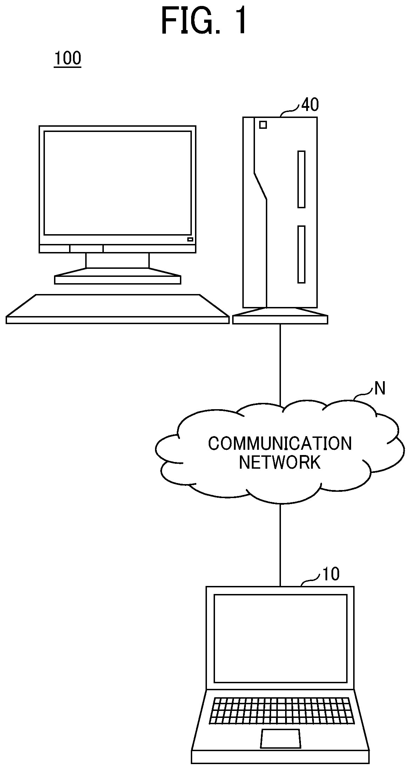

FIG. 1 is a diagram illustrating a general arrangement of an information processing system 100 according to an embodiment of the present disclosure. In the present embodiment, the information processing system 100 includes a terminal device 10, which is an example of an input/output device, and a server 40.

The server 40 includes one or more information processing apparatuses communicable with the terminal device 10 via a communication network N. In one example, the server 40 is a web server that returns a processing result to the terminal device 10 in response to a request from the terminal device 10. The server is a computer or software that functions to provide information and a processing result in response to a request from a client.

The server 40 may be compatible with cloud computing. Cloud computing is a mode of use that allows resources on a network to be used without identifying specific hardware resources. Cloud computing may be implemented in any form such as in software as a service (SaaS), platform as a service (PaaS), or infrastructure as a service (IaaS). Thus, the server 40 is not housed in a single housing or provided as a single device. The functions of the server 40 may be distributed to a plurality of information processing apparatuses, or each of the plurality of information processing apparatuses may have all the functions of the server 40 and the information processing apparatus to be used for processing may be switched by load distribution or the like.

The server 40 may call an application programming interface (API) made public by an external system to use a large-scale language model 4005, instead of a built-in large-scale language model 4005. The large-scale language model 4005 will be described below.

The terminal device 10 is a general-purpose information processing terminal used by a user of the information processing system 100. A web browser or a native application dedicated to the server 40 operates in the terminal device 10. In a case where the terminal device 10 executes a web browser, the terminal device 10 and the server 40 execute a web application. The web application is an application that operates in coordination with a program written in a programming language (e.g., JavaScript^{®}) operating on a web browser and a program on the web server (e.g., the server 40). In a case where the web application is executed, the processing according to the present embodiment may be performed by the server 40 or the terminal device 10 that has received the web application.

An application that is installed and executed locally on the terminal device 10 is referred to as a native application. Also in the present embodiment, the application executed on the terminal device 10 may be either a web application or a native application. In a case where the native application is executed, the processing according to the present embodiment may be performed by the server 40 or the terminal device 10 that executes the native application.

In one example, the terminal device 10 is a personal computer (PC), a smartphone, a personal digital assistant (PDA), or a tablet terminal. The terminal device 10 is any device on which a web browser or a native application operates. The terminal device 10 may be an electronic whiteboard, a television receiver, or a wearable device such as a pair of glasses. A plurality of terminal devices 10 may be present. In this case, in one example, the plurality of terminal devices 10 have similar hardware configurations.

The terminal device 10 and the server 40 are communicable with each other via the communication network N. The communication network N is implemented by, for example, the Internet, a mobile communication network, or a local area network (LAN). The communication network N may include wired communication networks and wireless communication networks in compliance with, for example, third generation (3G), Worldwide Interoperability for Microwave Access (WiMAX), or long term evolution (LTE). In one example, the terminal device 10 establishes communication using short-range communication technology such as Bluetooth^{®} or near field communication (NFC^{®}).

In FIG. 1, the server 40 and the terminal device 10 communicate with each other via the communication network N. In another example, the user may directly operate the server 40 from a console, or the terminal device 10 may have the functions of the server 40. In other words, the terminal device 10 may provide the functions of the information processing system 100 in a stand-alone manner.

### Example of Hardware Configuration

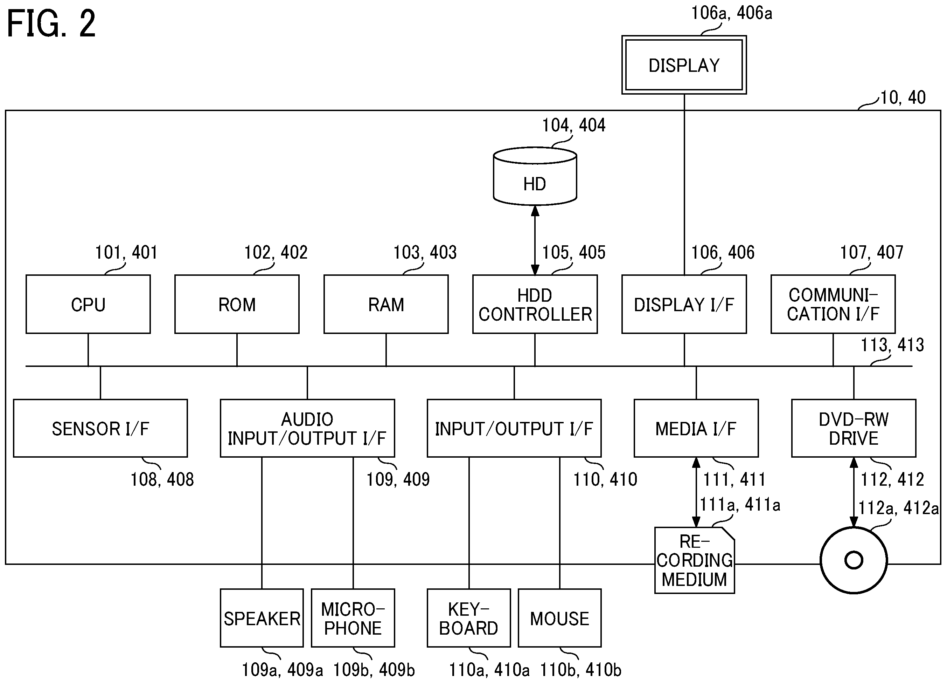

FIG. 2 is a diagram illustrating a hardware configuration of the terminal device 10 and the server 40 according to the present embodiment. The hardware elements of the terminal device 10 are denoted by reference numerals in the 100 series. The hardware elements of the server 40 are denoted by reference numerals in the 400 series.

The following describes the hardware elements of the terminal device 10. Since the hardware elements of the server 40 are similar to those of the terminal device 10, the description thereof will be omitted.

The terminal device 10 is implemented by a computer. As illustrated in FIG. 2, the terminal device 10 includes a central processing unit (CPU) 101, a read-only memory (ROM) 102, a random-access memory (RAM) 103, a hard disk (HD) 104, a hard disk drive (HDD) controller 105, a display interface (I/F) 106, and a communication I/F 107.

The CPU 101 controls the overall operation of the terminal device 10. The ROM 102 stores a program such as an initial program loader (IPL) used for driving the CPU 101. The RAM 103 is used as a work area for the CPU 101.

The HD 104 stores various data such as a program. The HDD controller 105 controls reading or writing of various data from or to the HD 104 under the control of the CPU 101.

The display I/F 106 is a circuit to control a display 106a to display an image. The display 106a is an example of display unit such as a liquid crystal display or an organic electroluminescence (EL) display that displays various types of information such as a cursor, a menu, a window, characters, or an image. The communication I/F 107 is an interface used for communication with another device (external device).

When the terminal device 10 is a glasses device, the terminal device 10 may use a circuit that causes a transmissive reflective member such as a lens to display an image as an alternative to the display I/F 106.

The communication I/F 107 is, for example, a network interface card (NIC) in compliance with transmission control protocol/Internet protocol (TCP/IP).

The terminal device 10 further includes a sensor I/F 108, an audio input/output I/F 109, an input I/F 110, a media I/F 111, and a digital versatile disc rewritable (DVD-RW) drive 112.

The sensor I/F 108 is an interface that receives information detected by various sensors. The audio input/output I/F 109 is a circuit that processes the input of audio signals from a microphone 109b and the output of audio signals to a speaker 109a under the control of the CPU 101. The input I/F 110 is an interface for connecting a predetermined input means to the terminal device 10.

A keyboard 110a is a type of input means and includes multiple keys for inputting characters, numerical values, or various instructions. A mouse 110b is a type of input means for selecting or executing various instructions, selecting a target for processing, moving a cursor being displayed, or performing an operation on a display screen.

The media I/F 111 controls reading or writing (storing) of data from or to a recording medium 111a such as a flash memory. The DVD-RW drive 112 controls reading or writing of various data from or to a DVD-RW 112a as an example of a removable recording medium. The removable recording medium is not limited to a DVD-RW and may be, for example, a digital versatile disc recordable (DVD-R). Further, the DVD-RW drive 112 may be replaced with a Blu-ray drive that controls reading or writing of various data from or to a Blu-ray Disc^{®}.

The terminal device 10 further includes a bus line 113. The bus line 113 includes an address bus and a data bus. The bus line 113 electrically connects the components of the terminal device 10, such as the CPU 101, to one another.

The programs described above may be stored in recording media such as an HD and a compact disc read-only memory (CD-ROM), and the recording media may be distributed domestically or internationally as a program product. For example, the terminal device 10 executes a program according to an embodiment of the present disclosure to implement an information processing method according to an embodiment of the present disclosure. Functions

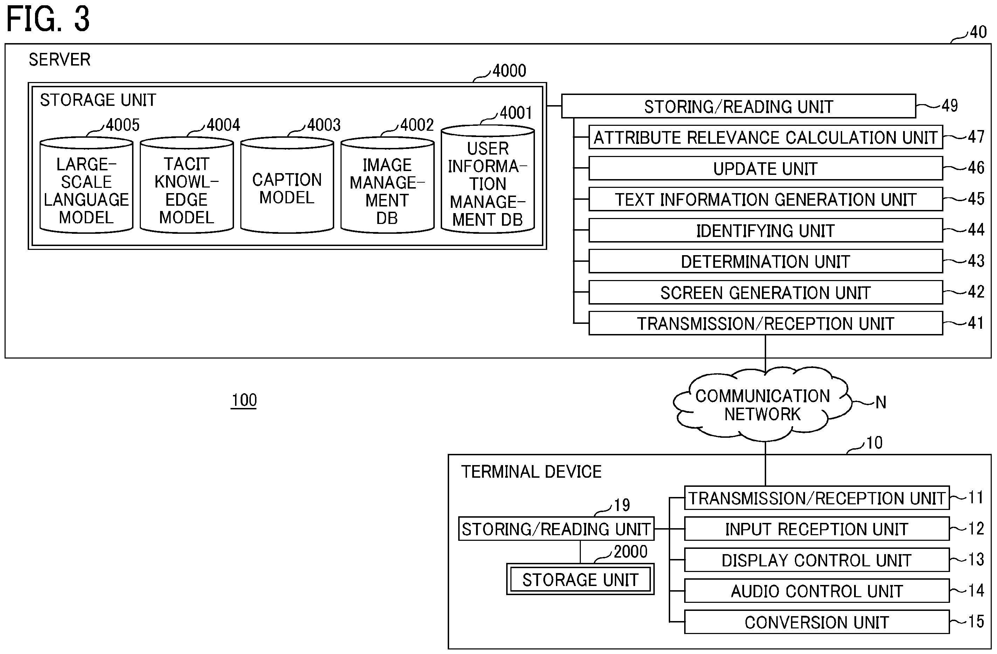

FIG. 3 is a block diagram illustrating an example of a functional configuration of the server 40 and the terminal device 10 in the information processing system 100 according to the present embodiment.

### Terminal Device

As illustrated in FIG. 3, the terminal device 10 includes a transmission/reception unit 11, an input reception unit 12, a display control unit 13, an audio control unit 14, a conversion unit 15, and a storing/reading unit 19. Each unit is a function implemented by or means caused to function by any one or more of the hardware elements illustrated in FIG. 2 operating in accordance with instructions from the CPU 101 according to a program loaded onto the RAM 103 from the HD 104. The terminal device 10 further includes a storage unit 2000 implemented by at least one of the RAM 103 and the HD 104 illustrated in FIG. 2.

The transmission/reception unit 11 is an example of transmission means or second transmission means and is implemented by an instruction from the CPU 101 illustrated in FIG. 2 and the communication I/F 107 illustrated in FIG. 2. The transmission/reception unit 11 transmits and receives various data (or information) to and from another terminal, device, apparatus, or system via the communication network N.

The input reception unit 12 is an example of input reception means and is implemented by an instruction from the CPU 101 illustrated in FIG. 2 and the input I/F 110 and the audio input/output I/F 109. The input reception unit 12 receives various inputs from a user via the microphone 109b, the keyboard 110a, and the mouse 110b illustrated in FIG. 2.

The display control unit 13 is an example of display control means and output means and is implemented by an instruction from the CPU 101 illustrated in FIG. 2 and the display I/F 106 illustrated in FIG. 2. The display control unit 13 causes the display 106a as an example of a display unit to display various images and screens. When the terminal device 10 is a glasses device, the display control unit 13 causes a transmissive reflective member such as a lens to display a virtual image as an alternative to the display I/F 106.

The audio control unit 14 is an example of audio control means and output means and is implemented by an instruction from the CPU 101 illustrated in FIG. 2 and the audio input/output I/F 109 illustrated in FIG. 2. The audio control unit 14 causes the speaker 109a as an example of a sound reproduction unit to reproduce sound.

The conversion unit 15 is an example of processing means and is implemented by an instruction from the CPU 101 illustrated in FIG. 2. The conversion unit 15 performs a process of converting character information into voice information and processing for converting voice information into character information.

The storing/reading unit 19 is an example of storage control means and is implemented by an instruction from the CPU 101 illustrated in FIG. 2 and the HD 104, the media I/F 111, and the DVD-RW drive 112 illustrated in FIG. 2. The storing/reading unit 19 stores various data in the storage unit 2000, the recording medium 111a, or the DVD-RW 112a and reads various data from the storage unit 2000, the recording medium 111a, or the DVD-RW 112a.

### Functional Configuration of Server

The server 40 includes a transmission/reception unit 41, a screen generation unit 42, a determination unit 43, an identifying unit 44, a text information generation unit 45, an update unit 46, an attribute relevance calculation unit 47, and a storing/reading unit 49. Each unit is a function implemented by or means caused to function by any one or more of the hardware elements illustrated in FIG. 2 operating in accordance with instructions from the CPU 401 according to a program loaded onto the RAM 403 from the HD 404. The server 40 further includes a storage unit 4000 implemented by the HD 404 illustrated in FIG. 2. The storage unit 4000 is an example of storage means.

The server 40 may be implemented by multiple computers in a manner that one or more of the functions thereof are distributed to the multiple computers. In the following description, the server 40 is a server computer residing in a cloud environment. In another example, the server 40 may be a server residing in an on-premises environment.

The transmission/reception unit 41 is an example of transmission means or first transmission means and is implemented by an instruction from the CPU 401 illustrated in FIG. 2 and the communication I/F 407 illustrated in FIG. 2. The transmission/reception unit 41 transmits and receives various data (or information) to and from another terminal, device, apparatus, or system via the communication network N.

The screen generation unit 42 is an example of screen generation means and is implemented by an instruction from the CPU 401 illustrated in FIG. 2. The screen generation unit 42 generates various screens. When the terminal device 10 executes a web application, screen information is created by, for example, Hypertext Markup Language (HTML), Extensible Markup Language (XML), Cascade Style Sheet (CSS), or JavaScript^{®.} Thus, the screen information may be referred to as a web application. When the terminal device 10 executes a client application, the screen information is stored in the terminal device 10, and the information to be displayed is transmitted in the form of, for example, XML.

The determination unit 43 is an example of determination means and is implemented by an instruction from the CPU 401 illustrated in FIG. 2. The determination unit 43 performs various determinations described below.

The identifying unit 44 is an example of identifying means and is implemented by an instruction from the CPU 401 illustrated in FIG. 2. The identifying unit 44 identifies a target image.

The text information generation unit 45 is an example of text information generation means and is implemented by an instruction from the CPU 401 illustrated in FIG. 2. The text information generation unit 45 generates text information.

The update unit 46 is an example of update means and is implemented by an instruction from the CPU 401 illustrated in FIG. 2. The update unit 46 updates a model described below.

The attribute relevance calculation unit 47 is an example of attribute relevance calculation means and is implemented by an instruction from the CPU 401 illustrated in FIG. 2. The attribute relevance calculation unit 47 calculates the level of attribute relevance between attribute information of the user and attribute information of a data provider or the level of attribute relevance between the attribute information of the user and attribute information of a past user.

The storing/reading unit 49 is an example of storage control means and is implemented by an instruction from the CPU 401 illustrated in FIG. 2 and the HD 404, the media I/F 411, and the DVD-RW drive 412 illustrated in FIG. 2. The storing/reading unit 49 stores various data in the storage unit 4000, the recording medium 411a, or the DVD-RW 412a and reads various data from the storage unit 4000, the recording medium 411a, or the DVD-RW 412a. The storage unit 4000, the recording medium 411a, and the DVD-RW 412a are examples of storage means.

The storage unit 4000 includes a user information management DB 4001 including a user information management table, an image management DB 4002 including an image information management table, a caption model 4003, a tacit knowledge model 4004, and a large-scale language model 4005.

The user information management DB 4001 stores and manages various types of information related to users, such as attribute information of the users. The image management DB 4002 stores and manages various images such as a 3D image of a 3D point cloud or a 3D model and a captured spherical image.

The caption model 4003 is generated by executing a learning process using a combination of an image and a caption comment (described in detail below) as training data, and causes a computer to function to output the caption comment based on the image. The caption comment is text data and is a comment describing an image among comments expressed by voice or text.

The tacit knowledge model 4004 is generated by executing a learning process using a combination of an image and a tacit knowledge comment for the image as training data, and causes a computer to function to output the tacit knowledge comment based on the image. The tacit knowledge comment is text data and is a comment other than a caption comment among the comments expressed by voice or text, that is, a comment relating to content not included in an image.

The large-scale language model 4005 is a computer language model generated by executing a learning process using a huge amount of unlabeled text as training data. The large-scale language model 4005 includes an artificial neural network having a large number of parameters. The large-scale language model 4005 is sufficiently trained by a method for learning a context, such as next-sentence prediction to understand a context by determining whether sentence 1 and sentence 2 are consecutive or a masked language model to understand a context by masking a word in a sentence and predicting the masked word from words that come before and after the masked word, to capture many sentence structures and meanings of human language.

### User Information Management Table

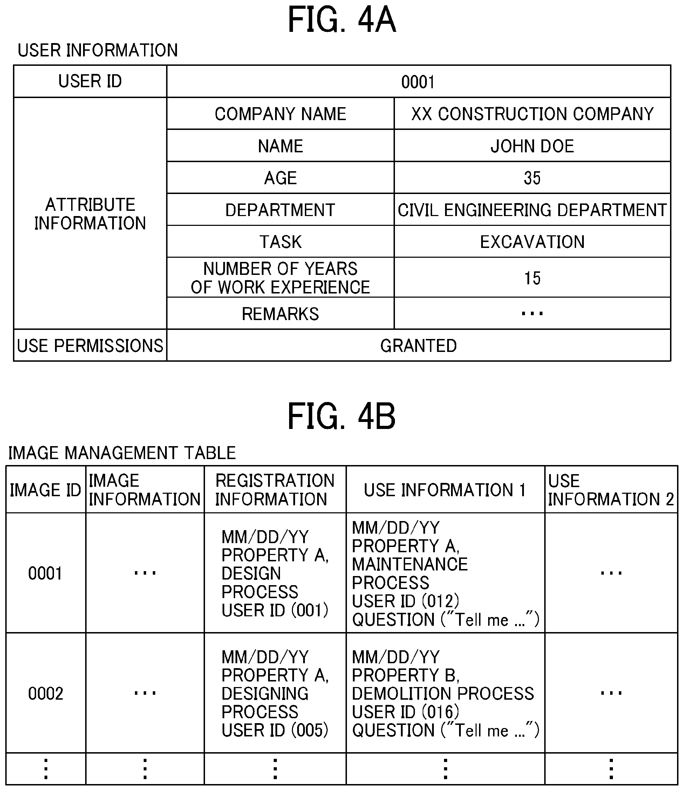

FIG. 4A is an illustration of an example of a user information management table according to the present embodiment. In the storage unit 4000, the user information management DB 4001 includes the user information management table as illustrated in FIG. 4A. The user information management table manages, for each user ID, attribute information indicating the attributes of a user indicated by the user ID and information indicating whether the user is permitted to use the text information generation unit 45 in association with each other.

The user ID is identification information that identifies a user. The user is a person who uses the text information generated by the tacit knowledge model 4004, and identification information of a data provider is also managed as a user ID.

The attribute information includes, for example, but not limited to, a company name, a name, an age, a department, a task, the number of years of work experience, and remarks. For example, the attribute information may include attributes such as a process (a task may be a process), a qualification (e.g., a manager, a worker, a subcontractor, a skilled person, or an unskilled person), an industry, a specialty, work experience, and a job title.

### Image Management Table

FIG. 4B is an illustration of an example of an image management table according to the present embodiment. In the storage unit 4000, the image management DB 4002 includes the image management table as illustrated in FIG. 4B.

The image management table manages, for each image ID, image information, registration information, and use information in association with each other. Examples of the image information include information on a 3D image and a captured spherical image. The registration information is related to a registration scene in which a data provider has registered training data such as image information. The use information is related to a use scene in which a user has designated image information and used the information processing system 100.

The registration information includes, for example, a date on which the image information is registered, a property name indicated by the image information, and a process name indicating a process related to the image information. Each process may be referred to as a piece of work. Processes are also referred to as phases in construction work, and include, for example, site inspection, design, construction, maintenance, and safety patrol. These processes are intended for the construction industry, and the types of the processes may be different depending on the industry or may be divided into more detailed processes. The registration information also includes the user ID of a person who has provided the image information (i.e., the user ID of a data provider). The person who provides the image information is a "data provider" described below.

The use information includes, for example, a date on which a user designates the image information and uses the information processing system 100, the name of a property for which the image information or the like is used, the user ID of the user who uses the information processing system 100, and the name of a process for which the image information or the like is used. In the image management table, a plurality of pieces of use information are managed for each image ID. The use information also includes an input type and an example of a specific input sentence. Examples of the input type include "question", "summary", "generation", "translation", and "conversion". In one example, an input sentence for the question is "Tell me ...", an input sentence for the summary is "Provide a summary of ...", an input sentence for the generation is "Provide an idea about..." or "Create a source code", an input sentence for the translation is "Translate the word X into language Y", and an input sentence for the conversion is "Change the image X to Y". Presenting the input type or the specific input sentence to the user allows the user to have a specific image of how to use the information processing system 100.

### Operation or Processes

### Model Update

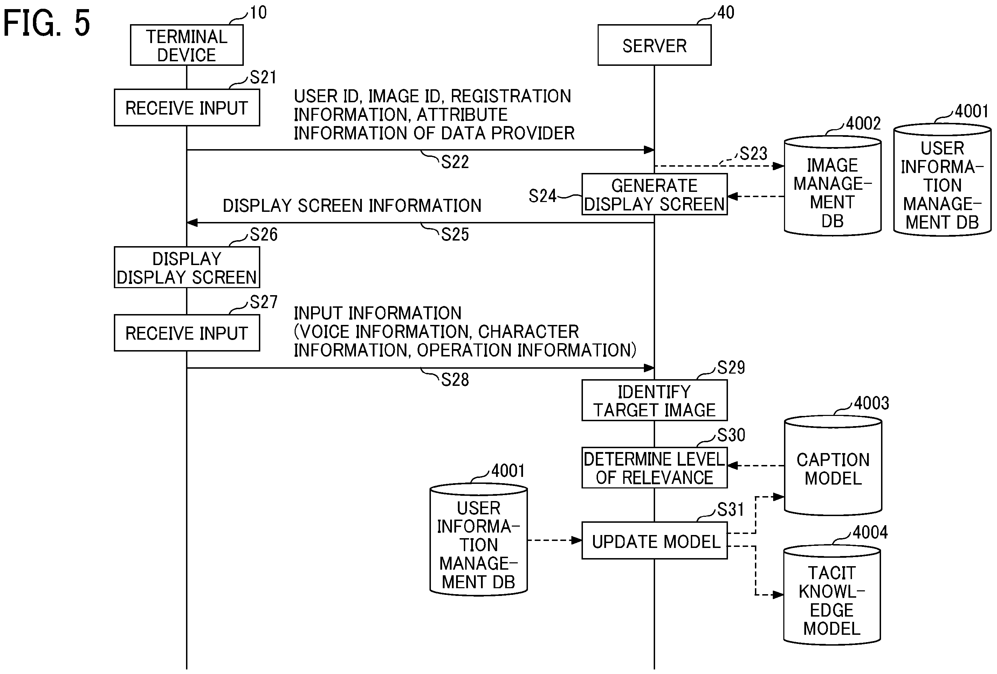

A model update process in which the tacit knowledge model 4004 learns data will be described with reference to FIG. 5. FIG. 5 is a sequence diagram illustrating an example of a model update process according to the present embodiment.

In step S21, the input reception unit 12 of the terminal device 10 receives an input operation of a user ID of a data provider, an image ID, and registration information on an input/output screen displayed on the display 106a. The input reception unit 12 receives an input operation of attribute information of the data provider on an attribute information registration screen (described below) displayed on the display 106a. The image ID identifies an image that is a portion of data to be used for learning. In the following description, the image is registered in the image management DB 4002 in advance. In another example, the image may be transmitted to the server 40 in step S22 described below.

In step S22, the transmission/reception unit 11 transmits the user ID, the image ID, the registration information, and the attribute information of the data provider received in step S21 to the server 40, and the transmission/reception unit 41 of the server 40 receives the user ID, the image ID, the registration information, and the attribute information of the data provider transmitted from the terminal device 10.

In step S23, the storing/reading unit 49 of the server 40 stores the registration information received in step S22 in the image management DB 4002 in association with the image ID. The image management DB 4002 is searched using the image ID received in step S22 as a search key, and image information corresponding to the image ID is read. In step S23, the storing/reading unit 49 further stores the attribute information of the data provider received in step S22 in the user information management DB 4001.

In step S24, the screen generation unit 42 generates a display screen including the image information read by the storing/reading unit 49.

In one example, the data provider inputs multiple image IDs in step S21, and the image management DB 4002 is searched using the multiple image IDs as search keys in step S23. Accordingly, the storing/reading unit 49 reads multiple pieces of image information.

In another example, in step S21, a document ID that identifies a document including a desired image may be input as an alternative to the image ID, and the image management DB 4002 may manage one or more pieces of image information in association with the document ID.

Accordingly, in step S22, the transmission/reception unit 11 transmits the document ID as an alternative to the image ID, and, in step S23, the image management DB 4002 is searched using the document ID as a search key to read one or more pieces of image information associated with the document ID.

In step S25, the transmission/reception unit 41 transmits display screen information of the display screen generated in step S24 to the terminal device 10, and the transmission/reception unit 11 of the terminal device 10 receives the display screen information transmitted from the server 40. In some embodiments, instead of the processing of steps S21 to S25, the transmission/reception unit 11 of the terminal device 10 may receive, as the display screen information, information indicating a captured image transmitted from an image capturing device.

The display control unit 13 of the terminal device 10 causes the display 106a to display the display screen based on the display screen information received in step S25 (step S26). In some embodiments, the display control unit 13 may cause the display 106a to display an image managed by the terminal device 10 as a display screen instead of the display screen based on the display screen information received in step S25.

In step S27, the input reception unit 12 of the terminal device 10 receives input information input by the data provider on the displayed display screen. A plurality of data providers may enter input information.

The input information includes voice information, character information, and operation information input by the data provider. The conversion unit 15 converts the voice information included in the input information into character information. The voice information, the character information, and the operation information include identification information identifying a target image on the display screen. The voice information and the character information include a caption comment describing the target image, and a tacit knowledge comment on content not included in the target image.

In step S28, the transmission/reception unit 11 transmits the input information input by the input operation received by the input reception unit 12 to the server 40, and the transmission/reception unit 41 of the server 40 receives the input information transmitted from the terminal device 10. In some embodiments, the transmission/reception unit 11 may transmit the input information and display screen information of a display screen indicating a captured image or an image managed by the terminal device 10 to the server 40, and the transmission/reception unit 41 of the server 40 may receive the input information and the display screen information transmitted from the terminal device 10.

In step S29, the identifying unit 44 identifies a target image on the display screen, based on the identification information included in the input information received in step S28.

In step S30, the determination unit 43 acquires a caption comment, based on the caption model 4003, by using the target image identified in step S29. Further, the determination unit 43 determines the level of relevance between the caption comment and the comment included in the input information received in step S28. The level of relevance to be determined by the determination unit 43 is different from the level of attribute relevance.

In one example, the determination unit 43 may determine the level of relevance of the entire comment included in the input information received in step S28 to the acquired caption comment. In another example, the determination unit 43 may divide the comment included in the input information received in step S28 into multiple comments and determine the level of relevance of each of the divided comments to the acquired caption comment.

In step S31, the update unit 46 updates the caption model 4003 with training data including a comment determined to have a high level of relevance in step S30 as a caption comment and the target image identified in step S29, and updates the tacit knowledge model 4004 with training data including a comment determined to have a low level of relevance in step S30 as a tacit knowledge comment and the target image identified in step S29.

In step S31, the storing/reading unit 49 searches the user information management DB 4001 using the user ID received in step S22 as a search key to read the attribute information of the data provider associated with the user ID, and the update unit 46 updates the tacit knowledge model 4004 with, as training data, a tacit knowledge comment including the attribute information of the data provider and the registration information related to the target image.

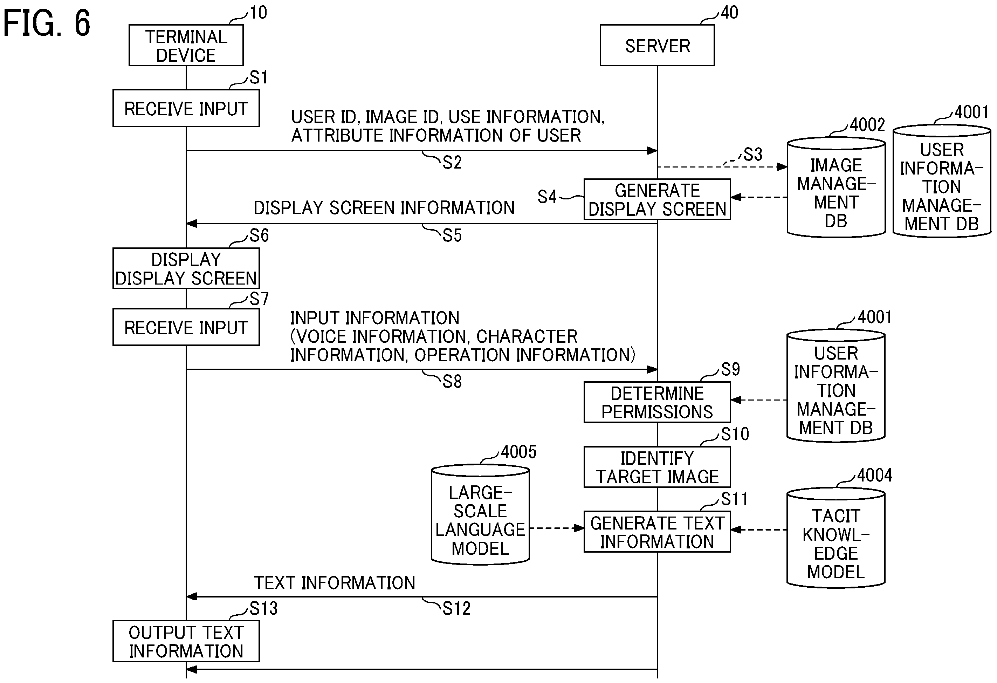

When the information processing system 100 includes a plurality of terminal devices 10, the processing of steps S21 and S22, the processing of steps S25 and S26, and the processing of steps S27 and S28 may be performed by different terminal devices 10 or may be each performed by a plurality of terminal devices 10, and the terminal device 10 illustrated in FIG. 5 may be different from the terminal device 10 illustrated in FIG. 6.

The functions of the server 40 illustrated in FIG. 3 may be integrated into the terminal device 10, and the terminal device 10 may perform the processing of the server 40 illustrated in FIG. 5.

### Use of Information Processing System

A process for using the information processing system 100 by a user will be described with reference to FIG. 6. FIG. 6 is a sequence diagram illustrating an example of a text information generation process according to the present embodiment.

In step S1, the input reception unit 12 of the terminal device 10 receives an input operation of a user ID of the user, an image ID, and use information on an input/output screen displayed on the display 106a. The input reception unit 12 may receive an input operation of attribute information of the user on an attribute information registration screen (described below) displayed on the display 106a, and the attribute information of the user may be registered in the user information management DB 4001 in advance.

In step S2, the transmission/reception unit 11 transmits the user ID, the image ID, the use information, and the attribute information of the user received in step S1 to the server 40. The transmission/reception unit 41 of the server 40 receives the user ID, the image ID, the use information, and the attribute information of the user transmitted from the terminal device 10.

In step S3, the storing/reading unit 49 of the server 40 stores the use information received in step S2 in the image management DB 4002 in association with the image ID. The storing/reading unit 49 searches the image management DB 4002 using the image ID received in step S2 as a search key to read the image information, the registration information, and the use information corresponding to the image ID. The storing/reading unit 49 further stores the attribute information of the user received in step S2 in the user information management DB 4001.

In step S4, the screen generation unit 42 generates a display screen including the image information read by the storing/reading unit 49. The attribute relevance calculation unit 47 calculates the level of attribute relevance between attribute information of the current user and attribute information of a data provider read from the user information management DB 4001 by the storing/reading unit 49. The screen generation unit 42 generates an image including the attribute information of the data provider having the highest level of attribute relevance. The attribute relevance calculation unit 47 may calculate the level of attribute relevance between attribute information of the current user and attribute information of a past user read from the user information management DB 4001 by the storing/reading unit 49. The screen generation unit 42 generates an image including the attribute information of the past user having the highest level of attribute relevance.

In one example, multiple image IDs are input in step S1, and the image management DB 4002 is searched using the multiple image IDs as search keys in step S3. Accordingly, multiple pieces of image information are read.

In another example, in step S1, a document ID that identifies a document including a desired image may be input as an alternative to the image ID, and the image management DB 4002 may manage one or more pieces of image information in association with the document ID.

Accordingly, in step S2, the transmission/reception unit 11 transmits the document ID as an alternative to the image ID, and, in step S3, the image management DB 4002 is searched using the document ID as a search key to read one or more pieces of image information associated with the document ID.

In step S5, the transmission/reception unit 41 transmits display screen information of the display screen generated in step S4 to the terminal device 10. The transmission/reception unit 11 of the terminal device 10 receives the display screen information transmitted from the server 40. In some embodiments, instead of the processing of steps S1 to S5, the transmission/reception unit 11 of the terminal device 10 may receive, as the display screen information, information indicating a captured image transmitted from an image capturing device.

In step S6, the display control unit 13 of the terminal device 10 causes the display 106a to display the display screen based on the display screen information received in step S5. In some embodiments, the display control unit 13 may cause the display 106a to display an image managed by the terminal device 10 as a display screen instead of the display screen based on the display screen information received in step S5. In one example, in step S6, a question-and-answer screen described below is displayed as a display screen, and attribute information of a data provider or a past user having the highest level of attribute relevance to the attribute information of the user is displayed.

In step S7, the input reception unit 12 of the terminal device 10 receives input information input by the user on the displayed display screen.

The input information includes voice information, character information, and operation information input by the user. The conversion unit 15 may convert the voice information included in the input information into character information. The voice information, the character information, and the operation information include identification information identifying a target image on the display screen, and a question about the target image.

The input information may include one or more pieces of attribute information of data providers or past users. For example, the user views the attribute information of the data provider or the past user having the highest level of attribute relevance to the attribute information of the user and inputs a question such as "Please provide an answer mainly including tacit knowledge comments from data providers aged 30's" including one or more of the attributes indicated by the attribute information.

In step S8, the transmission/reception unit 11 transmits the input information received by the input reception unit 12 to the server 40. The transmission/reception unit 41 of the server 40 receives the input information transmitted from the terminal device 10. In some embodiments, the transmission/reception unit 11 may transmit the input information and display screen information of a display screen indicating a captured image or an image managed by the terminal device 10 to the server 40, and the transmission/reception unit 41 of the server 40 may receive the input information and the display screen information transmitted from the terminal device 10.

In step S9, the storing/reading unit 49 searches the user information management DB 4001 using the user ID received in step S2 as a search key to read the attribute information and the use permissions of the user associated with the user ID. The determination unit 43 determines, based on the use permissions read from the user information management DB 4001, whether the user is permitted to use the text information generation unit 45.

If it is determined in step S9 that the user is permitted to use the text information generation unit 45, then, in step S10, the identifying unit 44 identifies a target image on the display screen, based on the identification information included in the input information received in step S8.

In step S11, the text information generation unit 45 acquires a tacit knowledge comment based on the tacit knowledge model 4004 by using the target image identified in step S10, and generates text information based on the large-scale language model 4005 by using the tacit knowledge comment and the question extracted from the input information received in step S8. In one example, the large-scale language model 4005 generates a natural conversation from the tacit knowledge comment and the question.

The text information generation unit 45 may convert voice information included in the input information into character information. The text information generated by the text information generation unit 45 may be either voice information or character information.

The text information generation unit 45 may generate text information without using a question, or may generate a fixed question in the information processing system 100 and use the fixed question to generate text information. In this case, the sentence of the question is not visible to the user. In another example, the text information generation unit 45 may generate fixed questions in the information processing system 100, cause a display unit, such as the display 106a, to display the fixed questions to prompt the user to select any of the fixed questions, and use the selected question.

In step S12, the transmission/reception unit 41 transmits the text information generated in step S11 to the terminal device 10. The transmission/reception unit 11 of the terminal device 10 receives the text information transmitted from the server 40.

When the received text information is character information, in step S13, the display control unit 13 of the terminal device 10 causes the display 106a to display the text information, or the conversion unit 15 converts the received text information into voice information and the audio control unit 14 causes the speaker 109a to reproduce the converted text information. When the received text information is voice information, the text information is reproduced by the speaker 109a, or the conversion unit 15 converts the received text information into character information and the display 106a displays the converted text information.

When the information processing system 100 includes a plurality of terminal devices 10, the processing of steps S1 and S2, the processing of steps S5 and S6, the processing of steps S7 and S8, and the processing of steps S12 and S13 may be performed by different terminal devices 10 or may be each performed by a plurality of terminal devices 10.

The functions of the server 40 illustrated in FIG. 3 may be integrated into the terminal device 10, and the terminal device 10 may perform the processing of the server 40 illustrated in FIG. 6.

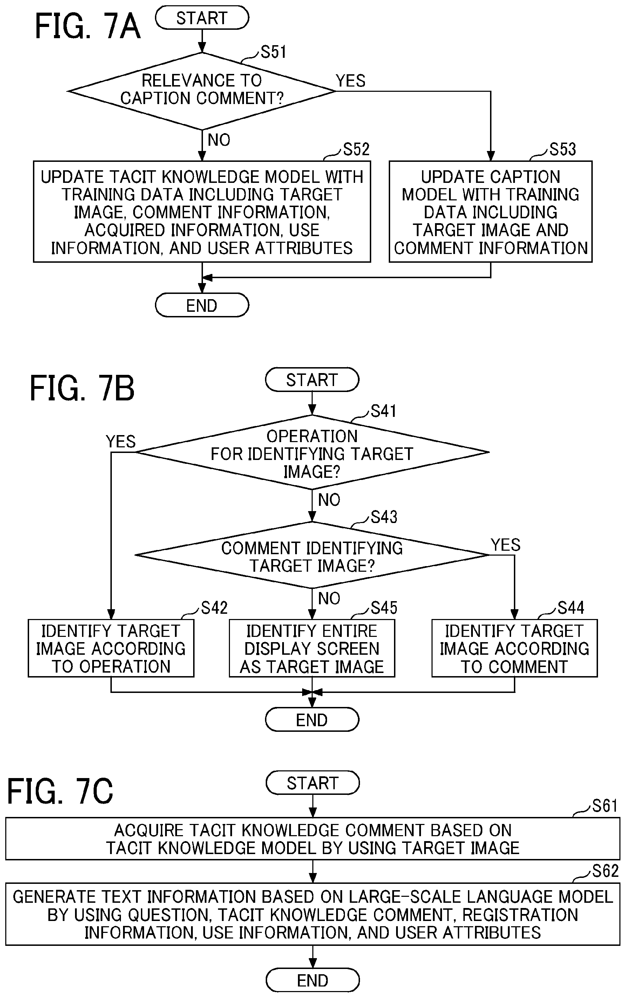

FIG. 7A, FIG. 7B, and FIG. 7C are flowcharts illustrating an example of various processes according to the present embodiment. FIG. 7A illustrates a process corresponding to steps S30 and S31 in FIG. 5.

In step S51, the determination unit 43 determines the level of relevance between the caption comment acquired from the caption model 4003 using the target image and the comment included in the input information received from the terminal device 10. For example, when the ratio of a portion matching the caption comment to the comment included in the input information is equal to or greater than a predetermined value, the determination unit 43 determines that the level of relevance between the comment included in the input information and the caption comment is high. A comment having a high level of relevance to the caption comment means a comment that is highly likely to describe the content of the target image.

In one example, the determination unit 43 may determine the level of relevance of the entire comment included in the input information received from the terminal device 10 to the acquired caption comment. In another example, the determination unit 43 may divide the comment included in the input information received from the terminal device 10 into multiple comments and determine the level of relevance of each of the divided comments to the acquired caption comment.

For example, after determining an object in the target image by image recognition or object detection, the determination unit 43 may determine whether a word in a caption comment on the object is included in the comment in the input information, or may determine, for example, the ratio of the number of included words to the number of words of the comment included in the input information as the level of relevance.

In step S52, the update unit 46 updates the tacit knowledge model 4004 with training data including a tacit knowledge comment that is a comment determined to have a low level of relevance in step S51, the target image, the registration information and the use information related to the target image, and the attribute information of the user.

In step S53, the update unit 46 updates the caption model 4003 with training data including the target image and a caption comment that is a comment determined to have a high level of relevance in step S51.

The update of the tacit knowledge model 4004 and the caption model 4003 may be optional. In other words, when a predetermined condition is satisfied, the update unit 46 may execute the processing of step S52 to update the tacit knowledge model 4004 or may execute the processing of step S53 to update the caption model 4003.

FIG. 7B is a flowchart illustrating a process corresponding to step S10 in FIG. 6 and step S29 in FIG. 5.

In step S41, the determination unit 43 determines whether the operation information included in the input information received from the terminal device 10 includes an operation for identifying a target image. If the operation information includes an operation for identifying a target image, then, in step S42, the identifying unit 44 identifies the target image according to the operation.

In step S43, the determination unit 43 determines whether the voice information or the character information included in the input information received from the terminal device 10 includes a comment identifying the target image. If a comment identifying the target image is included, then, in step S44, the identifying unit 44 identifies the target image according to the comment. The comment identifying the target image is, for example, a comment identifying a position on the display screen such as right or left, or a comment identifying registration information of the target image.

If the operation information does not include an operation for identifying a target image and the voice information and the character information do not include a comment identifying the target image, then, in step S45, the identifying unit 44 identifies the entire display screen as the target image.

In step S42, when the operation information includes operations each for identifying a corresponding one of multiple target images, the identifying unit 44 may identify the multiple target images according to the respective operations.

In one example, in step S44, when the voice information or the character information includes comments each identifying a corresponding one of multiple target images, the identifying unit 44 may identify the multiple target images according to the respective comments.

In another example, when the operation information includes an operation for identifying a target image and the voice information or the character information includes a comment identifying another target image, the identifying unit 44 may identify the respective target images according to the operation and the comment.

In one example, in step S45, when the display screen includes text information, the identifying unit 44 may identify a portion obtained by excluding the text information from the display screen as the target image.

FIG. 7C is a flowchart illustrating a process corresponding to step S11 in FIG. 6.

In step S61, the text information generation unit 45 acquires a tacit knowledge comment, based on the tacit knowledge model 4004, by using the target image. In step S62, the text information generation unit 45 generates text information, based on the large-scale language model 4005, by using the tacit knowledge comment, the question extracted from the input information received in step S8, the registration information and the use information read in step S3 for the target image, and the attribute information of the user read in step S9.

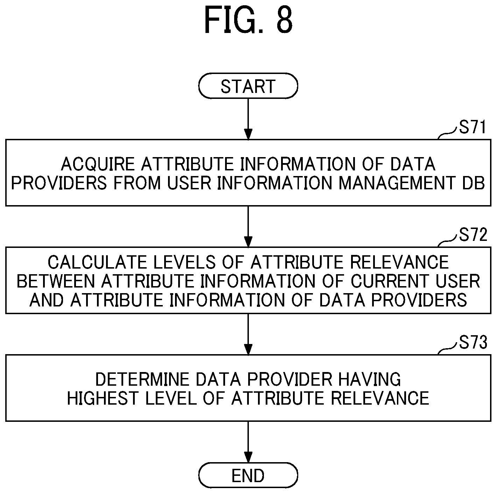

FIG. 8 is a flowchart illustrating a process for displaying attribute information of a data provider having the highest level of attribute relevance to the attribute information of the user. The process illustrated in FIG. 8 is implementable in step S4 in FIG. 6 or may be implemented as appropriate in response to an operation by the user.

In step S71, the attribute relevance calculation unit 47 acquires attribute information of data providers from the user information management DB 4001. The user IDs of data providers are registered in the registration information in the image management DB 4002. The attribute information of all the data providers included in the registration information in the image management DB 4002 may be acquired. When the user identifies multiple image IDs in step S1 in FIG. 6, attribute information of multiple data providers identified by the multiple image IDs may be acquired.

In step S72, the attribute relevance calculation unit 47 calculates, for each data provider, the level of attribute relevance between the attribute information of the current user who is currently using the information processing system 100 and the attribute information of the data provider. The level of attribute relevance may be calculated by the following methods. The following methods are examples, and any method that allows measurement of the degree of similarity between texts may be used.

A first method relates to a determination based on the number of matches between words included in two pieces of attribute information to be compared. Specifically, the two pieces of attribute information are compared for each item in one of the two pieces of attribute information such that the item in the one of the two pieces of attribute information is compared with all items in the other piece of attribute information. A second method relates to a determination based on the number of matches of words by comparing, for each item in attribute information, words included in the attribute information of the user with words included in the attribute information of each data provider.

In the first or second method, it is determined that the level of relevance is high when the number of matches of words is large. In the first or second method, furthermore, as the number of pieces of information described in the item "remarks" in the attribute information increases, the measurement accuracy of the level of relevance also increases. The attribute information is divided into words by morphological analysis as appropriate.

A third method is as follows. In natural language processing, words or sentences are often embedded in a multidimensional space and used for reasons such as expanding the amount of information (vector conversion). Vector conversion for natural language processing includes methods such as Bidirectional Encoder Representations from Transformers (BERT) and word-to-vector (word2vec).

Accordingly, the attribute relevance calculation unit 47 may generate two vectors converted from the attribute information in a vector space and determine the level of relevance based on vector similarity (distance) or cosine similarity instead of the number of matches of words.

In step S73, the attribute relevance calculation unit 47 determines a data provider having the highest level of attribute relevance. The attribute information of the data provider having the highest level of attribute relevance is transmitted to the terminal device 10. Examples of Screen Displayed by Terminal Device

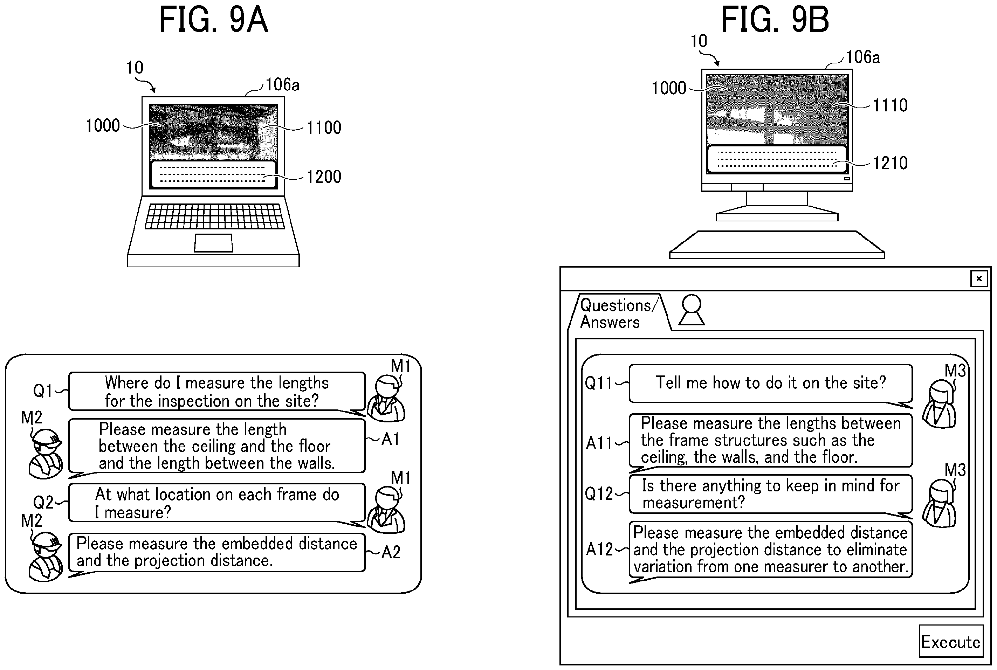

FIG. 9A and FIG. 9B are illustrations of screens displayed by the terminal device 10 in the model update process and the text information generation process, respectively, according to the present embodiment. FIG. 9A illustrates the model update process corresponding to steps S26 and S27 in FIG. 5 and FIGs. 7A and 7B.

The display control unit 13 of the terminal device 10 causes the display 106a to display a display screen 1000 received from the server 40. The display screen 1000 includes a target image 1100 and a text 1200.

The input reception unit 12 of the terminal device 10 receives, as input information input by data providers to the displayed display screen 1000, voice information indicating interactions Q1, A1, Q2, and A2 between a data provider M1 and a data provider M2 from the microphone 109b. The data providers M1 and M2 preferably have a sufficient amount of knowledge including tacit knowledge about work. The tacit knowledge model 4004 is updated based on such interactions between the data providers M1 and M2, thus allowing a user to acquire useful tacit knowledge comments.

The identifying unit 44 identifies the target image 1100, which is a portion obtained by excluding the text 1200 from the display screen 1000.

Then, the determination unit 43 determines the levels of relevance between a caption comment acquired from the caption model 4003 using the target image 1100 and the interactions Q1, A1, Q2, and A2.

The update unit 46 updates the tacit knowledge model 4004 with training data including the target image 1100 or the like and a tacit knowledge comment that is a comment determined to have a low level of relevance among the interactions Q1, A1, Q2, and A2, and updates the caption model 4003 with training data including the target image 1100 and a caption comment that is a comment determined to have a high level of relevance among the interactions Q1, A1, Q2, and A2.

FIG. 9B illustrates the text information generation process corresponding to steps S6, S7, and S 13 in FIG. 6 and FIGs. 7B and 7C.

The display control unit 13 of the terminal device 10 causes the display 106a to display a display screen 1000 received from the server 40. The display screen 1000 includes an image 1110 and a text 1210.

The input reception unit 12 of the terminal device 10 receives, as input information input by a user on the displayed display screen 1000, voice information indicating questions Q11 and Q12 uttered by a user M3 via the microphone 109b.

The identifying unit 44 identifies the image 1110, which does not include the text 1210, as a target image.

The text information generation unit 45 acquires a tacit knowledge comment based on the tacit knowledge model 4004 using the image 1110, and generates text information corresponding to answers A11 and A12 to the questions Q11 and Q12, respectively, based on the large-scale language model 4005, by using, for example, the tacit knowledge comment and the questions Q11 and Q12.

The display control unit 13 of the terminal device 10 causes the display 106a to display the text information corresponding to the answers A11 and A12 received from the server 40.

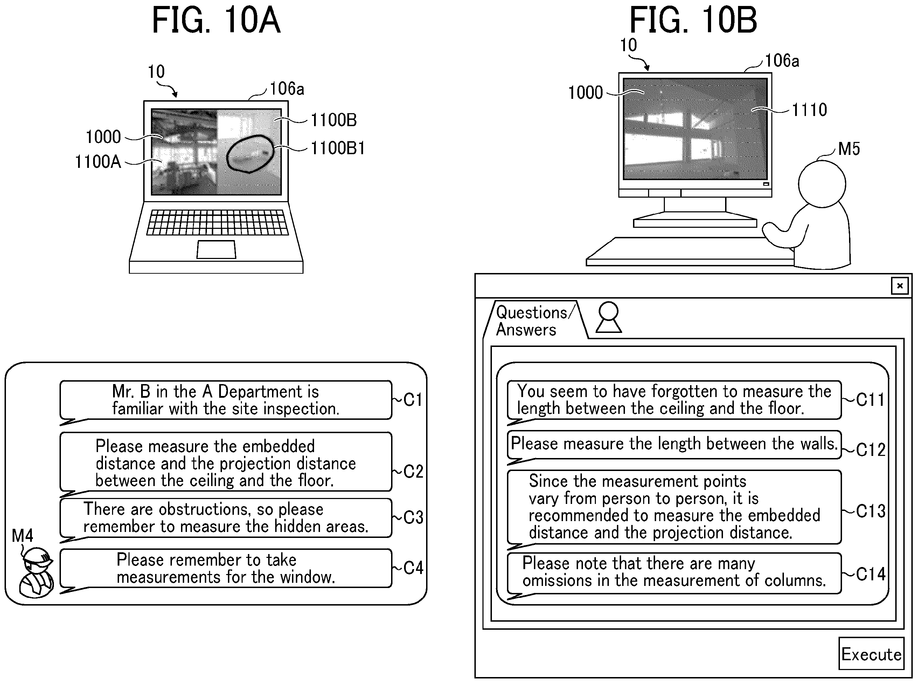

FIG. 10A and FIG. 10B are illustrations of other screens displayed by the terminal device 10 in the model update process and the text information generation process, respectively, according to the present embodiment.

FIG. 10A illustrates the model update process corresponding to steps S26 and S27 in FIG. 5 and FIGs. 7A and 7B. In an example illustrated in FIG. 10A, the tacit knowledge model 4004 is updated using voice information of one data provider and a partial image, rather than conversations between data providers.

The display control unit 13 of the terminal device 10 causes the display 106a to display a display screen 1000 received from the server 40. The display screen 1000 includes a first image 1100A and a second image 1100B.

The input reception unit 12 of the terminal device 10 receives, as input information input by a data provider on the displayed display screen 1000, character information indicating comments C1 to C4 of a data provider M4 from the keyboard 110a.

The input reception unit 12 also receives, as input information input by the data provider M4 on the displayed display screen 1000, operation information indicating an operation performed by the data provider M4 to identify a partial image 1100B1 in the second image 1100B from the mouse 110b.

The identifying unit 44 may identify the partial image 1100B1 as the target image, or may identify the first image 1100A or the second image 1100B as the target image.

Then, the determination unit 43 determines the levels of relevance between the caption comment acquired from the caption model 4003 using the target image and the comments C1 to C4.

The update unit 46 updates the tacit knowledge model 4004 with training data including the partial image 1100B1 or the like and a tacit knowledge comment that is a comment determined to have a low level of relevance among the comments C1 to C4, and updates the caption model 4003 with training data including the partial image 1100B1 and a caption comment that is a comment determined to have a high level of relevance among the comments C1 to C4.

FIG. 10B illustrates the text information generation process corresponding to steps S6, S7, and S13 in FIG. 6 and FIGs. 7B and 7C.

The display control unit 13 of the terminal device 10 causes the display 106a to display a display screen 1000 received from the server 40. The display screen 1000 includes an image 1110.

A user M5 does not perform an input on the displayed display screen 1000, and the input reception unit 12 does not receive input information input by the user M5 on the displayed display screen 1000. The identifying unit 44 identifies the image 1110, which is the entire display screen 1000, as the target image.

When the user M5 performs an operation to identify the partial image 1100B1 illustrated in FIG. 10A on the display screen 1000, the input reception unit 12 receives, as input information, operation information indicating the operation for identifying the partial image 1100B1 from the mouse 110b. In this case, the identifying unit 44 identifies a partial image corresponding to the partial image 1100B1 on the display screen 1000 as the target image according to the operation information.

The text information generation unit 45 acquires a tacit knowledge comment based on the tacit knowledge model 4004 using the image 1110, and generates text information corresponding to comments C11 to C14, based on the large-scale language model 4005, by using, for example, the tacit knowledge comment. The text information generation unit 45 may use preset template questions to generate text information.

The display control unit 13 of the terminal device 10 causes the display 106a to display the text information corresponding to the comments C11 to C14 received from the server 40.

### Presentation of Information on Data Provider Having Highest Level of Attribute Relevance among Data Providers

Several screens for a process of transmitting attribute information of a data provider having the highest level of attribute relevance from the server 40 to the terminal device 10 will be described. The attribute information of the data provider having the highest level of attribute relevance is displayed. Thus, the current user uses, as a reference for using the server 40, registration information provided by a data provider having attributes similar to those of the current user, leading to promotion of use of text information.

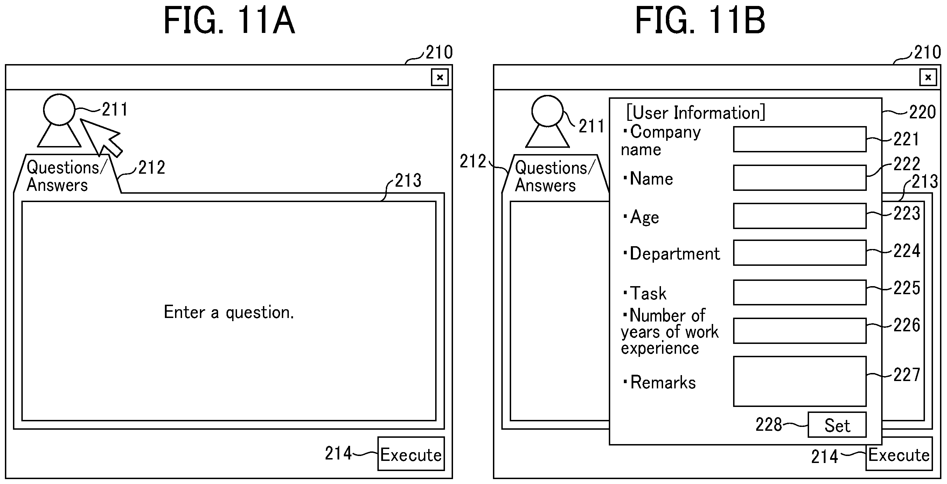

First, registration of attribute information of a user will be described with reference to FIGs. 11A and 11B. FIG. 11A illustrates a question-and-answer screen 210 displayed on the terminal device 10. The user registers the attribute information in the server 40 in advance so that the server 40 can calculate a level of attribute relevance. The question-and-answer screen 210 includes a user information registration icon 211, a question-and-answer display tab 212, and an input information input field 213. The question-and-answer screen 210 illustrated in FIG. 11A is displayed in, for example, step S1 in FIG. 6. Attribute information of data providers or users may be registered in the server 40 in advance.

When the user presses (clicks or taps) the user information registration icon 211, an attribute information registration screen 220 is displayed as a pop-up window. FIG. 11B illustrates the attribute information registration screen 220 displayed as a pop-up window. The attribute information registration screen 220 is a screen for registering the attribute information of the user. The attribute information registration screen 220 includes, for example, a company name field 221, a name field 222, an age field 223, a department field 224, a task field 225, a number-of-years-of-work-experience field 226, and a remarks field 227. The user inputs the attribute information in these input fields and presses a "Set" button 228. The attribute information of the user is transmitted to the server 40, and the storing/reading unit 49 stores the attribute information in the user information management DB 4001. A data provider also registers attribute information of the data provider in step S21 in FIG. 5 or in advance.

The illustrated example is based on the assumption the presence of relevance. However, the input of the attribute information is optional, and the user may use the information processing system 100 without inputting the attribute information. In a case where the user does not input the attribute information, the calculation of the level of attribute relevance between the user and the data provider fails, and thus, for example, information on a randomly selected data provider is displayed. The same applies to the following embodiments.

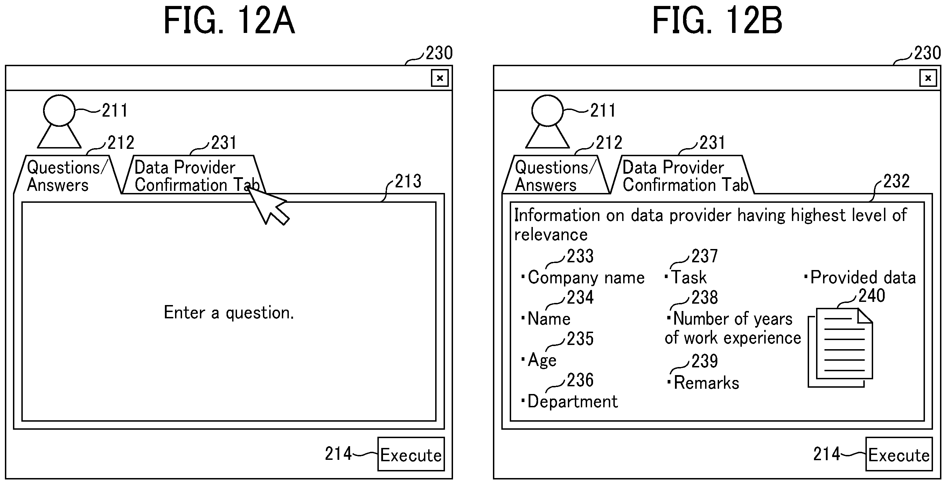

Next, attribute information of a data provider having a high level of attribute relevance, which is displayed in step S6 in FIG. 6, will be described with reference to FIGs. 12A and 12B. FIGs. 12A and 12B illustrate a question-and-answer screen 230 displayed when the user uses the information processing system 100. FIG. 12A illustrates the question-and-answer screen 230 for inputting input information. The question-and-answer screen 230 includes an input information input field 213. The input information input field 213 allows the user to display any input information. The question-and-answer screen 230 illustrated in FIG. 12A includes a data provider confirmation tab 231. When the user presses the data provider confirmation tab 231, attribute information of a data provider having the highest level of attribute relevance to the user is displayed.

FIG. 12B illustrates the question-and-answer screen 230 on which a data provider confirmation field 232 is displayed in response to a pressing of the data provider confirmation tab 231. In FIG. 12B, a company name 233, a name 234, an age 235, a department 236, a task 237, the number of years of work experience 238, and remarks 239 of the data provider having the highest level of attribute relevance to the user are displayed.

The data provider confirmation field 232 also displays an icon 240 indicating provided data. When the user presses the icon 240, provided data that has been provided by the data provider having the highest level of attribute relevance to the user is displayed. The provided data may include, for example, the registration information, the image information, and input information (voice information, character information, and operation information) used to register the registration information. As described above, the user is allowed to check the attribute information and the provided data of the data provider having the highest level of attribute relevance. Thus, the user uses the attribute information and the provided data as a reference for determining, for example, how the text information generated by the tacit knowledge model 4004 is used and to what extent the text information is reliable, leading to promotion of the use of the tacit knowledge model 4004.

The remarks 239 may include various types of information input by the data provider. The data provider is allowed to input, for example, information indicating the type of the provided data to the remarks field 227. The remarks 239 include, for example, a statement such as "Thanks to the information processing system, I now understand the process X". The remarks 239 allow the user who is unfamiliar with the tacit knowledge model to confirm how to use the information processing system 100.

In FIG. 12B, the attributes and the provided data may be displayed as a list in the data provider confirmation field 232, or any one of the provided data and the attributes may be clicked and displayed on a separate screen to allow the user to check the details of the selected information. The provided data may be the original data provided by the data provider or may be data obtained by applying some processing to the original data. Examples of the processing include deleting sensitive information, a personal name, a telephone number, or the like. In general, providing the original data itself is not recommended for security or privacy reasons.

According to the present embodiment, a user checks the attributes of a data provider having attributes similar to those of the user or provided data provided by the data provider to anticipate, for example, the reliability of a tacit knowledge model to be used, leading to promotion of the use of the tacit knowledge model.

### Second Embodiment

In the first embodiment, the attribute information of the data provider having the highest level of attribute relevance to the attribute information of the user is presented. In a second embodiment, statistical information created based on attribute information of the top N data providers having high levels of relevance among data providers is presented. This allows the user to refer to the statistical information of multiple data providers and thus grasp the tendency of the training data used by the tacit knowledge model.

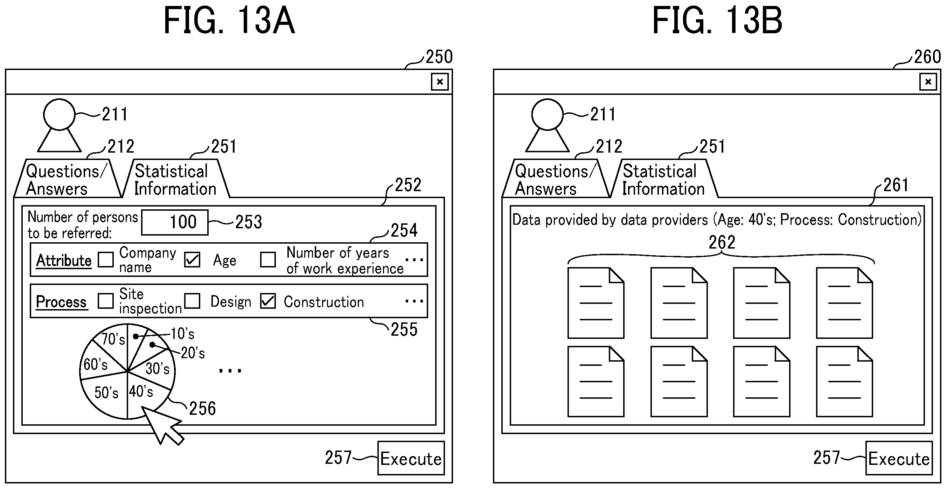

FIG. 13A illustrates a question-and-answer screen 250 on which a statistical information field 252 is displayed in response to a pressing of a statistical information tab 251. In one example, the question-and-answer screen 250 illustrated in FIG. 13A transitions from the question-and-answer screen 230 illustrated in FIG. 12A and is displayed in response to a pressing of the statistical information tab 251.

The statistical information field 252 includes a number-of-persons input field 253, an attribute selection field 254, and a process selection field 255.

The number-of-persons input field 253 is a field for the user to set the number of top data providers having high levels of attribute relevance to be selected.

The attribute selection field 254 displays items of attribute information of the data providers, together with check boxes for the items. The user selects an attribute for which the user desires to display statistical information from among the attributes of the data providers by checking the check box for the attribute.

The process selection field 255 displays process items, together with check boxes for the process items. The user selects a process to be displayed as statistical information by checking the check box for the process.

When the user presses an "Execute" button 257, a pie graph 256 (an example of statistical information) is displayed. The pie graph 256 presents age distribution of 100 persons involved in the "construction" process. In this way, the user sets an AND condition for the items "attribute" and "process". In one example, as the user changes the number of persons to be referred to in the number-of-persons input field 253, the pie graph 256 also changes.

When a plurality of attributes are selected in the attribute selection field 254, a number of pie graphs 256 equal to the number of selected attributes are displayed. The graph is not limited to a pie graph and may be a bar graph, a radar chart, or the like.

In one example, the statistical information may be displayed in a word cloud. The word cloud is a visualized graph of words depicted in different sizes or colors according to the frequency of appearance of words extracted from sentences. For example, the word cloud displays words such that a word having a higher frequency of appearance is depicted in a larger size and placed closer to the center of the word cloud. In the case of the example illustrated in FIG. 13A, the characters " 10's", "20's", "30's", "40's", "50's", "60's", and "70's" are displayed in the word cloud.

In another example, the statistical information may be displayed in rankings. For example, in the case of the example illustrated in FIG. 13A, rankings such as 50's being ranked first, 40's being ranked second, and 60's being ranked third are displayed. In the rankings for the number of users based on job titles, the job titles, such as site supervisor, site worker, and call center operator, are displayed in descending order of the number of users.

When the user presses a category of the statistical information (e.g., the age group of 40's) in the pie graph 256, information indicating that one of the sectors of the pie graph 256 has been selected is transmitted to the server 40, and provided data provided by data providers included in the category is displayed.

FIG. 13B illustrates a question-and-answer screen 260 displayed in response to a pressing of one of the categories. The question-and-answer screen 260 illustrated in FIG. 13B includes a data list field 261. The data list field 261 displays a provided data list 262 provided by data providers in the selected category (e.g., the age group of 40's). The provided data list 262 includes pieces of provided data provided by data providers aged 40's for the construction process. When the user presses any of the pieces of provided data, information indicating that any of the pieces of provided data is selected is transmitted to the server 40, and the details of the selected piece of provided data are displayed. In one example, the details of the piece of provided data are similar to those illustrated in FIG. 12B.

The display of the statistical information as illustrated in FIGs. 13A and 13B enables the user to check what data has been provided for training by, for example, employees of a company to which the user belongs. An example of a trouble in construction of a building is given. For example, if it is known that a tacit knowledge model has learned 1,000 cases of "construction", it is expected that the tacit knowledge model will answer questions about the trouble in construction. Thus, the user is motivated to use the tacit knowledge model.

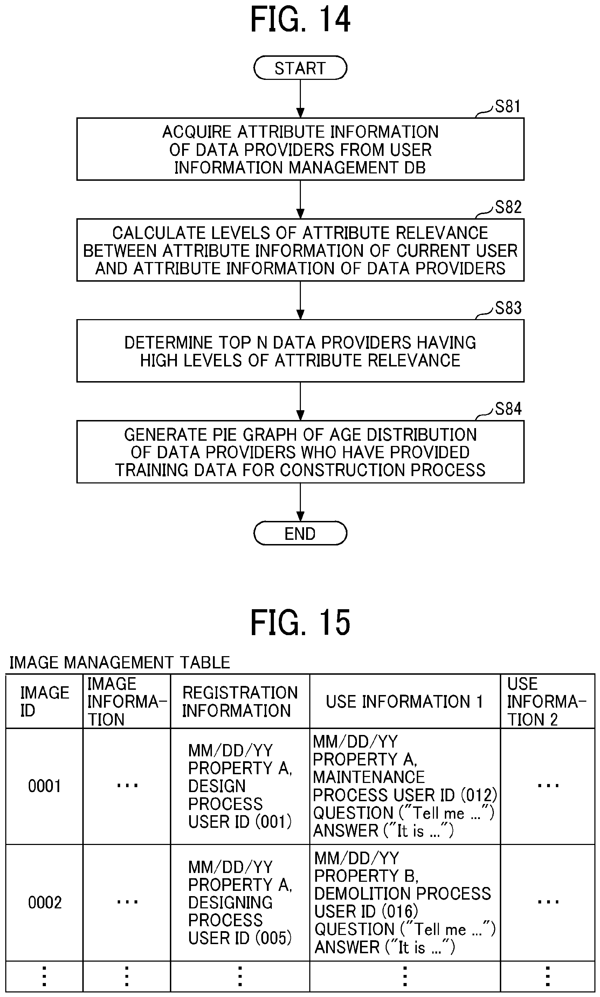

FIG. 14 illustrates a process for displaying statistical information generated from attribute information of the top N data providers having high levels of attribute relevance to the attribute information of the user. The process illustrated in FIG. 14 is implementable in step S4 in FIG. 6 or may be implemented as appropriate in response to an operation by the user. In the description of FIG. 14, differences from FIG. 8 will be described. The processing of steps S81 and S82 may be similar to that of steps S71 and S72 in FIG. 8.

In step S83, the attribute relevance calculation unit 47 determines the top N data providers having high levels of attribute relevance. N is the number of persons designated in the number-of-persons input field 253 by the user.

Then, the attribute relevance calculation unit 47 generates, for example, a pie graph 256 of age distribution of data providers involved in the construction process, based on the attribute and the process selected by the user using the terminal device 10 (S84). Screen information for displaying the pie graph 256 is transmitted to the terminal device 10.

According to the present embodiment, a user is allowed to refer to statistical information of multiple data providers having high levels of attribute relevance to attribute information of the user. This allows the user to grasp the tendency of training data for the tacit knowledge model to be used.

### Third Embodiment

A third embodiment describes the server 40 that presents chat information including a question asked by a user or an answer given by the server 40 to the question when the information processing system 100 was used in the past.

In the present embodiment, the use information in the image management DB 4002 also includes an answer (text information) from the information processing system 100. FIG. 15 illustrates an image management table according to the present embodiment. In the image management table illustrated in FIG. 15, unlike the image management table illustrated in FIG. 4B, the use information further includes answers. The answers are each text information (e.g., a tacit knowledge comment) transmitted from the server 40 to the terminal device 10 in response to a question asked by the user. More specifically, the use information may include specific chat information as follow.
Question: What items are to be carried out during safety patrol?
Answer: Checking objects placed on the floor and making sure that workers wear helmets.

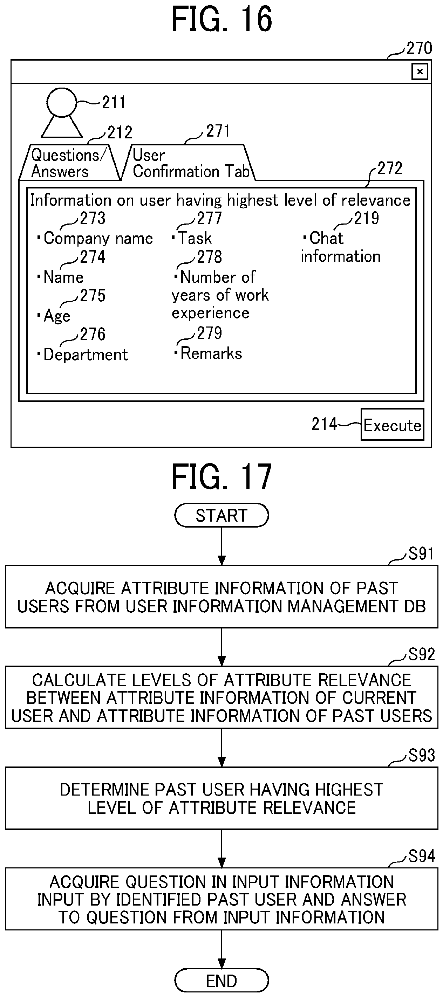

FIG. 16 illustrates a question-and-answer screen 270 on which a user confirmation field 272 is displayed in response to a pressing of a user confirmation tab 271. The question-and-answer screen 270 illustrated in FIG. 16 includes the user confirmation tab 271, and transitions from the screen illustrated in FIG. 12A in response to a pressing of the user confirmation tab 271. In the description of FIG. 16, differences from FIG. 12B will be described.

The question-and-answer screen 270 illustrated in FIG. 16 displays a company name 273, a name 274, an age 275, a department 276, a task 277, the number of years of work experience 278, and remarks 279 of the past user having the highest level of attribute relevance to the user. The question-and-answer screen 270 illustrated in FIG. 16 further displays an item, namely, chat information 219. When the user presses the chat information 219, the content of the chat information (i.e., a question and an answer) is displayed.

This allows the user to refer to chat information that has been generated between a past user having attributes similar to those of the user and the information processing system 100, and such chat information is thus useful for the user to use the information processing system 100.

In one example, information may be stored in the image management DB 4002 in association with each answer by the server 40. Such information includes the satisfaction level of the past user toward the answer (e.g., whether the answer was helpful), and various comments (e.g., "Why were you satisfied?" and "How did you make use of this answer?"). Such information is also displayable on the question-and-answer screen 270.

FIG. 17 illustrates a process for displaying attribute information of the past user having the highest level of attribute relevance to the attribute information of the user. The process illustrated in FIG. 17 is implementable in step S4 in FIG. 6 or may be implemented as appropriate in response to an operation by the user.

In step S91, the identifying unit 44 acquires attribute information of past users from the user information management DB 4001. The past users may be all the past users or may be users specified in the use information identified by the image ID identified by the user in step S1 in FIG. 6.

In step S92, the attribute relevance calculation unit 47 calculates the levels of attribute relevance between the attribute information of the current user who is currently using the information processing system 100 and the attribute information of the past users who have used the information processing system 100.

In step S93, the attribute relevance calculation unit 47 determines a past user having the highest level of attribute relevance.

In step S94, the attribute relevance calculation unit 47 acquires a question in input information input by the identified past user and an answer to the question from the input information. The question and the answer correspond to the chat information 219. The chat information 219 is transmitted to the terminal device 10 together with the attribute information of the past user having the highest level of attribute relevance.

According to the present embodiment, a user is allowed to refer to chat information that has been generated between a past user having the most similar attributes to the user and the information processing system 100, and such chat information is thus useful for the user to use the information processing system 100.

### Fourth Embodiment

In the third embodiment, the attribute information and the chat information of the past user having the highest level of attribute relevance is presented. In a fourth embodiment, statistical information created based on attribute information of the top N past users having high levels of attribute relevance among the past users having high levels of attribute relevance is presented. This allows the user to refer to statistical information related to the attributes of past users similar to the attributes of the user and thus use the statistical information as a reference for determining, for example, the reliability of the tacit knowledge model.

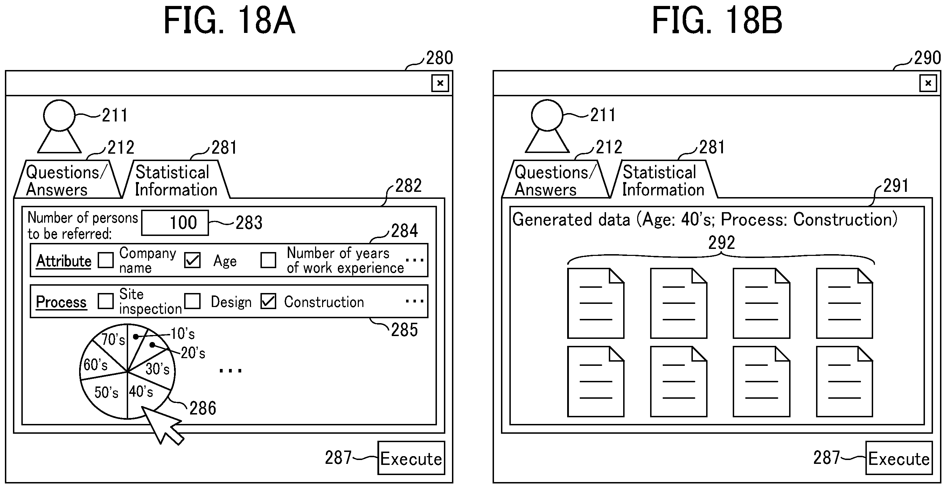

FIG. 18A illustrates a question-and-answer screen 280 on which a statistical information field 282 is displayed in response to a pressing of a statistical information tab 281. In the description of the question-and-answer screen 280 illustrated in FIG. 18A, differences from the question-and-answer screen 250 illustrated in FIG. 13A will be described. The statistical information field 282 includes a number-of-persons input field 283, an attribute selection field 284, a process selection field 285, and a pie graph 286. These items may be similar to those illustrated in FIG. 13A. The statistical information field 282 illustrated in FIG. 18A represents statistical information of past users, rather than statistical information of data providers.

FIG. 18B illustrates a question-and-answer screen 290 displayed in response to a pressing of one of the categories. The question-and-answer screen 290 illustrated in FIG. 18B includes a user confirmation field 291. The user confirmation field 291 displays generated data (namely, chat information) generated by the server 40 for the past users. The user confirmation field 291 displays, for example, a list 292 of pieces of chat information of past users aged 40's for the construction process among the past users who have used the information processing system 100. Specifically, each piece of chat information includes a question asked when a user used the server 40 in the past and an answer from the server 40. When the user presses any of the pieces of chat information, the question and answer included in the piece of chat information are displayed.

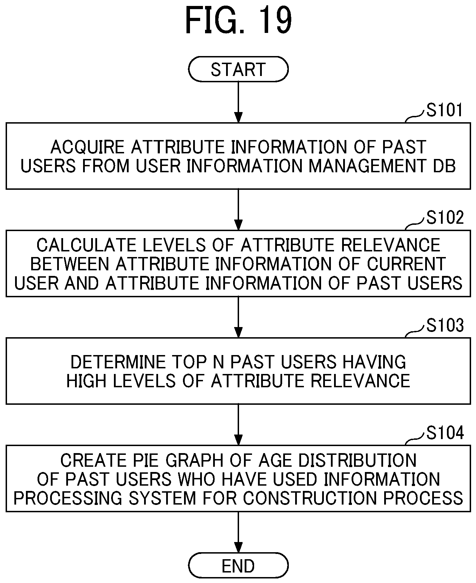

FIG. 19 illustrates a process for displaying statistical information generated from attribute information of the top N past users having high levels of attribute relevance to the attribute information of the user. In the description of FIG. 19, differences from FIG. 17 will be described. The processing of steps S101 and S102 may be similar to that of steps S91 and S92 in FIG. 17.

In step S103, the attribute relevance calculation unit 47 determines the top N past users having high levels of attribute relevance. N is the value designated in the number-of-persons input field 283 by the user.

In step S104, the attribute relevance calculation unit 47 creates a pie graph 286 of age distribution of past users who have used the information processing system 100 for the construction process. Screen information for displaying the pie graph 286 is transmitted to the terminal device 10.

According to the present embodiment, a user is allowed to refer to statistical information related to the attributes of past users similar to the attributes of the user and thus use the statistical information as a reference for determining, for example, the reliability of the tacit knowledge model.

### Fifth Embodiment

In a fifth embodiment, the information processing system 100 that supports images, moving images, and voices other than text in the first to fourth embodiments will be described.

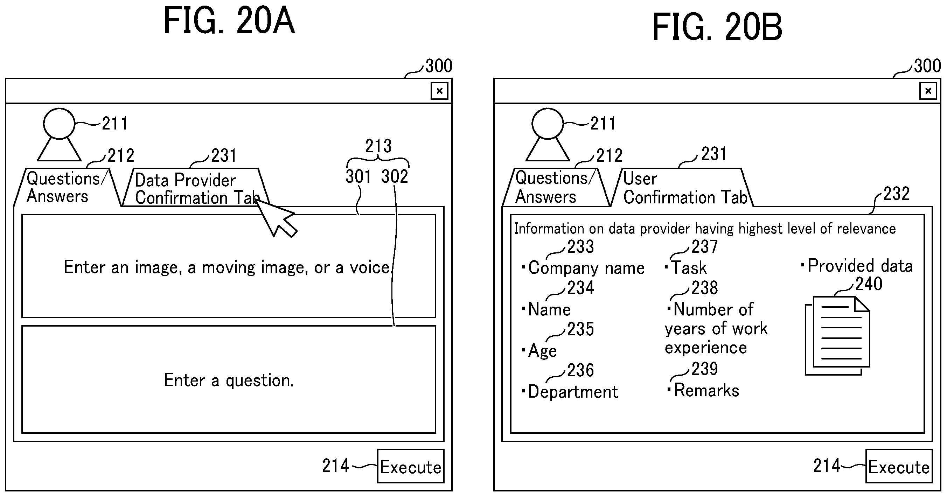

FIG. 20A illustrates a question-and-answer screen 300 according to the present embodiment. The question-and-answer screen 300 illustrated in FIG. 20A includes an input information input field 213 divided into a text portion 302 and an other content portion 301. As in the first embodiment, character information is input to the text portion 302. Content other than text, such as an image, a moving image, a voice, a point cloud, or a 3D model, is input to the other content portion 301. This allows the user to view text information (tacit knowledge comment) for an image, a moving image, or a voice.

FIG. 20B illustrates a question-and-answer screen 300 that is the same as the question-and-answer screen 230 illustrated in FIG. 12B. The question-and-answer screen 300 may be displayed by the same method as that according to the first embodiment. The question-and-answer screen 300 transitioning from the question-and-answer screen 300 illustrated in FIG. 20A may be any one of the question-and-answer screens 230, 260, 270, and 290 respectively illustrated in FIGs. 12B, 13B, 16, and 18B. That is, even when the user inputs an image, a moving image, or a voice, attribute information of a data provider, statistical information of the attributes of data providers, attribute information of a user, or statistical information of the attributes of users are displayable in a similar manner.

Some examples of combinations of input information and tacit knowledge comments will be described. The model described above is assumed to be a large-scale language model. However, the present embodiment uses a multimodal model in which a plurality of data formats (e.g., image, text, and gesture) are input and a predetermined data format is output. Case where the input information is a character string and content other than text information is generated as a tacit knowledge comment

A character string is input, and an image is generated. A character string is input, and a moving image is generated. A character string is input, and a voice is generated. A character string is input, and a 3D model is generated.

### Case where the input information includes a character string and non-character string information and text information is generated as a tacit knowledge comment

An image and a character string are input, and text information is generated. A 3D model and a character string are input, and text information is generated. A voice and a character string are input, and text information is generated.

### Case where the input information includes a character string and non-character string information and content other than text information is generated as a tacit knowledge comment

An image and a character string are input, and an image is generated. A moving image and a character string are input, and a moving image is generated. A 3D model and a character string are input, and a 3D model is generated. A voice and a character string are input, and a voice is generated.

According to the present embodiment, a user is allowed to obtain content other than text information as provided data or chat information, leading to promotion of the use of the information processing system 100.

### Sixth Embodiment

In a sixth embodiment, the information processing system 100 that displays content other than text on a question-and-answer screen in the first to fifth embodiments will be described.

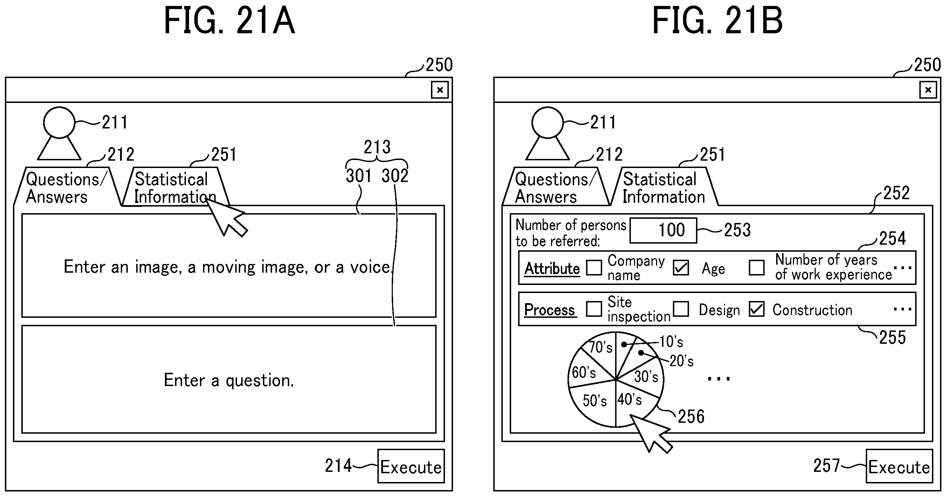

FIG. 21A illustrates a question-and-answer screen 250 that is similar to the question-and-answer screen 300 illustrated in FIG. 20A. FIG. 21B illustrates a question-and-answer screen 250 that transitions from the question-and-answer screen 250 illustrated in FIG. 21A in response to a pressing of a statistical information tab 251.

The question-and-answer screen 250 illustrated in FIG. 21B may be similar to that the question-and-answer screen 250 illustrated in FIG. 13A.

When the user presses a category of statistical information (e.g., the age group of 40's) in the pie graph 256, provided data provided by data providers in the age group included in the category (or use information registered by the user) is displayed.

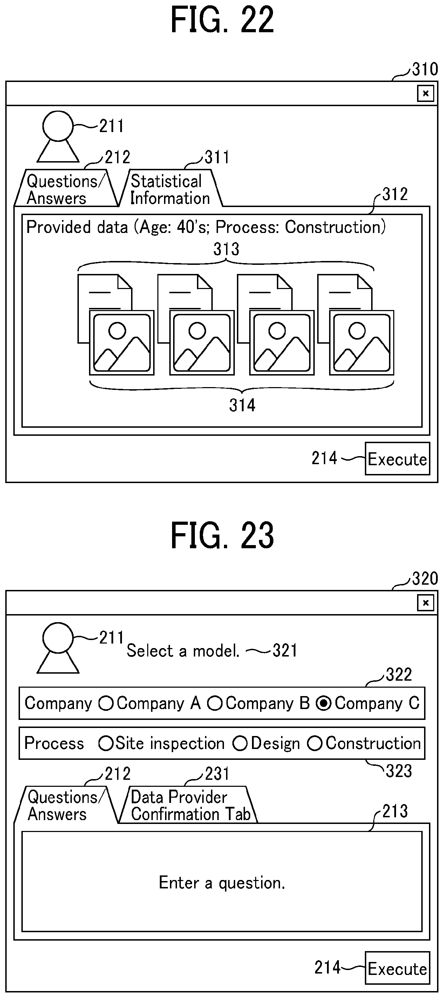

FIG. 22 illustrates a question-and-answer screen 310 displayed in response to a pressing of one of the categories. The question-and-answer screen 310 illustrated in FIG. 22 includes a user confirmation field 312 that displays a provided data list 313 provided by data providers in the selected category (e.g., the age group of 40's). The provided data list 313 includes pieces of provided data provided by data providers who are aged 40's and have provided training data for the construction process.

The pieces of provided data also display icons 314 indicating content in addition to the character information. When one of the icons 314 is pressed, a corresponding piece of content (e.g., an image of the process) is displayed in a pop-up or on a separate screen. In FIG. 22, the content is presented as thumbnails of images. In another example, the provided data list 313 may also include other types of content. The pieces of provided data may display different types of content. The different types of content are, for example, character information, an image, and a voice.

In a case where the information processing system 100 is configured to generate content other than character information, the information processing system 100 may display content supported by the information processing system 100. For example, the information processing system 100 displays an image provided by a data provider or an image generated for the user.

While attribute information of data providers and provided data have been described with reference to FIGs. 21A, 21B, and 22, attribute information of past users, chat information generated by the information processing system 100, and the like are also displayable.

According to the present embodiment, a user is allowed to also check provided data other than text provided by data providers or past users and chat information other than text refined by past users during the use of the information processing system 100, leading to further promotion of the use of the information processing system 100.

### Seventh Embodiment

The caption model 4003, the tacit knowledge model 4004, and the large-scale language model 4005 may be generated in units of groups. The term "group" refers to, for example, a company, a process, or an attribute (or a combination thereof). The user may desire to know which data provider has provided training data for a company to which the user belongs or a related process, or may desire to know which user is involved in a company to which the user belongs or a related process. In a seventh embodiment, the information processing system 100 that allows a user to select the caption model 4003, the tacit knowledge model 4004, or the large-scale language model 4005 for generating text information (hereinafter also referred to simply as a model) will be described. That is, in the present embodiment, the caption model 4003, the tacit knowledge model 4004, and the large-scale language model 4005 are generated for each of the groups. Data providers and users are classified in advance into groups to which the data providers and the users belong.

FIG. 23 illustrates a question-and-answer screen 320 for selecting a model. The question-and-answer screen 320 includes a message 321 stating "Select a model", a company selection field 322, and a process selection field 323. The company selection field 322 displays a list of companies, and the process selection field 323 displays a list of processes.

The company selection field 322 allows the user to select a model trained with data within a certain company. The process selection field 323 allows the user to select a model trained with data of a certain process. Either a company or a process may be selectable, or a company and a process may be selectable using an AND or OR condition.

The attribute relevance calculation unit 47 calculates a level of attribute relevance between attribute information of the user and attribute information of a data provider who has provided data used to generate the selected model. In another example, the attribute relevance calculation unit 47 calculates a level of attribute relevance between attribute information of the user and attribute information of a past user who has used the selected model. This allows the user to know which data provider has provided training data to the group to which the user belongs or which past user in the group to which the user belongs has used the information processing system 100.

According to the present embodiment, information having a high use promotion effect is presented for each group such as each company, and thus the use promotion effect is increased.

Any one of the above-described operations may be performed in various other ways, for example, in an order different from the one described above.

The server 40 described in the embodiments described above is an example, and various example system configurations are available depending on the application or purpose.

For example, an example in which a tacit knowledge model for an industry such as civil engineering or architecture answers a question has been described in the embodiments. However, the tacit knowledge model may be used in any industry in which tacit knowledge is effective, such as medical care, dental care, or investment decisions.

The attribute information illustrated in, for example, FIGs. 12A and 12B may be displayed when the user uses the server 40 or at any timing.

In addition, instead of the data provider or past user having the highest level of attribute relevance to the attribute information of the user, the top several persons may be listed, and the user may select a person whose attribute information is to be displayed from among the top several persons.

In the embodiments described above, the information processing system 100 is a client-server system. However, the functions of the server 40 may be installed in the terminal device 10 as applications. That is, the user may be allowed to use the functions presented in the embodiments described above in a stand-alone manner.

In the example configurations illustrated in, for example, FIG. 3, the configurations are divided according to main functions to facilitate understanding of processing performed by the server 40. The scope of the present disclosure is not limited by the manner in which the configurations are divided into units of processing or by the names of the units of processing. The processes of the server 40 may be divided into more units of processing in accordance with the content of the processes. Further, the division may be made such that each unit of processing includes more processing operations.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The apparatuses or devices described in one or more embodiments are just one example of plural computing environments that implement the one or more embodiments disclosed herein. In some embodiments, the server 40 includes multiple computing devices, such as a server cluster. The multiple computing devices are configured to communicate with one another through any type of communication link including, for example, a network and a shared memory, and perform the processes disclosed herein.

Further, the server 40 may perform the processing steps disclosed herein in various combinations. The components of the server 40 may be integrated into one apparatus or divided into a plurality of apparatuses. The processes performed by the server 40 may be performed by the terminal device 10.

## Claims

1. An information processing apparatus (40) comprising:
storage means (4000) configured to store a model generated using text data as training data, the text data being data based on at least one of voice information and character information;
text information generation means (45) configured to generate, based on a question and the model, text information indicating an answer to the question; and
screen generation means (42) configured to generate a screen based on attribute information of one or more data providers who have provided the at least one of voice information and character information.

2. The information processing apparatus (40) according to claim 1, further comprising
transmission means (41) communicable with a terminal device (10) via a network and configured to transmit screen information of the screen to the terminal device (10).

3. The information processing apparatus (40) according to claim 2, wherein the one or more data providers are selected from among a plurality of data providers, the information processing apparatus (40) further comprising
attribute relevance calculation means (47) configured to calculate a level of attribute relevance between attribute information of a user of the terminal device (10) and attribute information of each of the plurality of data providers, wherein
the screen generation means (42) is configured to generate the screen including the attribute information of the one or more data providers selected from among the plurality of data providers based on the level of attribute relevance, and
the transmission means (41) is configured to transmit the screen information of the screen including the attribute information of the selected data providers to the terminal device (10).

4. The information processing apparatus (40) according to claim 3, wherein the selected data providers have a highest level of the attribute relevance to the attribute information of the user among the plurality of data providers.

5. The information processing apparatus (40) according to claim 3, wherein
the screen generation means (42) is configured to generate the screen including the at least one of voice information and character information having been provided by the one or more data providers having a highest level of the attribute relevance to the attribute information of the user, and
the transmission means (41) is configured to transmit the screen information of the screen including the at least one of voice information and character information to the terminal device (10).

6. The information processing apparatus (40) according to claim 3, wherein
the one or more data providers are top N data providers having a high level of attribute relevance to the attribute information of the user among the plurality of data providers, the N having been designated by the user,
the attribute relevance calculation unit (47) is further configured to create statistical information using attribute information of the top N data providers,
the screen generation means (42) is configured to generate a screen including the statistical information, and
the transmission means (41) is configured to transmit the screen information of the screen including the statistical information to the terminal device (10).

7. The information processing apparatus (40) according to claim 6, wherein
the statistical information is displayed as a graph representing, as one or more categories, the attribute information of the one or more data providers,
in response to the terminal device (10) transmitting information indicating that one of the one or more categories in the graph is selected,
the screen generation means (42) is configured to generate a screen including a list of voice information and character information having been provided by at least one data provider represented by the selected category among the one or more data providers, and
the transmission means (41) is configured to transmit screen information of the screen including the list to the terminal device (10), and
in response to the terminal device (10) transmitting information indicating that particular voice information and character information are selected from the list,
the screen generation means (42) is configured to generate a screen including the selected voice information and character information, and
the transmission means (41) is configured to transmit screen information of the screen including the selected voice information and character information to the terminal device (10).

8. The information processing apparatus (40) according to claim 2, further comprising
attribute relevance calculation means (47) configured to calculate a level of attribute relevance between attribute information of a user of the terminal device (10) and attribute information of each of a plurality of past users who have used the model, wherein
the screen generation means (42) is configured to generate a screen including attribute information of one or more past users selected from among the plurality of past users based on the level of attribute relevance, and
the transmission means (41) is configured to transmit screen information of the screen including the attribute information of the selected past users to the terminal device (10).

9. The information processing apparatus (40) according to claim 8, wherein
the selected past users have a highest level of the attribute relevance to the attribute information of the user among the plurality of past users.

10. The information processing apparatus (40) according to claim 8, wherein
the screen generation means (42) is configured to generate the screen including text information being provided to the past user having the highest level of the attribute relevance to the attribute information of the user, and
the transmission means (41) is configured to transmit the screen information of the screen including the text information to the terminal device (10).

11. The information processing apparatus (40) according to claim 8, wherein
the one or more past users are top N past users having a high level of attribute relevance to the attribute information of the user among the plurality of past users, the N having been designated by the user,
the attribute relevance calculation unit (47) is further configured to create statistical information using attribute information of the top N past users,
the screen generation means (42) is configured to generate a screen including the statistical information, and
the transmission means (41) is configured to transmit screen information of the screen including the statistical information to the terminal device (10).

12. The information processing apparatus (40) according to claim 11, wherein
the statistical information is displayed as a graph representing, as one or more categories, the attribute information of the one or more past users,
in response to the terminal device (10) transmitting information indicating that one of the one or more categories in the graph is selected,
the screen generation means (42) is configured to generate a screen including a list of text information having been provided to at least one past user represented by the selected category among the one or more past users, and
the transmission means (41) is configured to transmit screen information of the screen including the list to the terminal device (10), and
in response to the terminal device (10) transmitting information indicating that a particular text information is selected from the list,
the screen generation means (42) is configured to generate a screen including the selected text information, and
the transmission means (41) is configured to transmit screen information of the screen including the selected text information to the terminal device (10).

13. The information processing apparatus (40) according to any one of claims 3 to 7, wherein
the plurality of data providers are classified into groups according to a class to which the plurality of data providers belong,
the storage means (4000) is configured to store a plurality of models including the model, the plurality of models being generated for each of the groups,
the screen generation means (42) is configured to generate a screen including a list of the groups,
the transmission means (41) is configured to transmit screen information of the screen including the list of the groups to the terminal device (10), and
in response to the terminal device (10) transmitting information indicating that a particular group is selected from the list of the groups,
the screen generation means (42) is configured to generate a screen including attribute information of at least one data provider classified in the selected group, and
the transmission means (41) is configured to transmit screen information of the screen including the attribute information of the at least one data provider classified in the selected group to the terminal device (10).

14. The information processing apparatus (40) according to any one of claims 8 to 12, wherein
the plurality of past users are classified into groups according to a class to which the plurality of past users belong,
the storage means (4000) is configured to store a plurality of models including the model, the plurality of models being generated for each of the groups,
the screen generation means (42) is configured to generate a screen including a list of the groups,
the transmission means (41) is configured to transmit screen information of the screen including the list of the groups to the terminal device (10), and
in response to the terminal device (10) transmitting information indicating that a group is selected from the list of the groups,
the screen generation means (42) is configured to generate a screen including attribute information of at least one past user classified in the selected group, and
the transmission means (41) is configured to transmit screen information of the screen including the attribute information of the at least one past user classified in the selected group to the terminal device (10).

15. The information processing apparatus (40) according to any one of claims 3 to 7, wherein
the model is generated by a learning process performed using an image and the text data as training data,
the text information generation means (45) is configured to generate the text information, based on the model and a target image identified by the user using the terminal device (10), and
the transmission means (41) is configured to transmit the text information to the terminal device (10).

16. The information processing apparatus (40) according to claim 15, wherein
the screen generation means (42) is configured to generate a screen including the image, the image being provided by the data provider having the highest level of attribute relevance to the attribute information of the user among the plurality of data providers, and
the transmission means (41) is configured to transmit screen information of the screen including the image to the terminal device (10).

17. An information processing system comprising:
the information processing apparatus (40) according to any one of claims 2 to 16; and
the terminal device (10) communicable with the information processing apparatus (40) via a network, wherein
the transmission means (41) of the information processing apparatus (40) includes first transmission means (41), and
the terminal device (10) includes
input reception means (12) configured to receive an input of the question,
second transmission means (11) configured to transmit the question to the information processing apparatus (40), and
display control means (13) configured to display a screen including attribute information of the one or more data providers, based on the screen information received from the information processing apparatus (40).

18. An information processing method performed by an information processing apparatus, the information processing method comprising:
generating (S11, S62), based on a question and a model, text information indicating an answer to the question,
the model being generated using text data as training data, the text data being data based on at least one of voice information and character information having been input; and
generating (S4) a screen including attribute information of one or more data providers who have provided the at least one of voice information and character information.

19. Carrier means carrying computer readable code for controlling a computer system to carry out the method of claim 18.
